# EUROPEAN PATENT SPECIFICATION

(11) **EP 3 884 700 B1**
(45) Date of publication and mention of the grant of the patent: **10.01.2024**
(21) Application number: 19736501.8
(22) Date of filing: 30.05.2019
(51) Int. Cl.: H04W 28/02, H04W 76/00

(54) **SERVICE INSTANCE INDICATION FOR RESOURCE CREATION**
DIENSTINSTANZANZEIGE FÜR RESSOURCENERZEUGUNG
INDICATION D'INSTANCE DE SERVICE POUR LA CRÉATION DE RESSOURCES

(30) Priority: 19.11.2018 WO PCT/CN2018/116113
(43) Date of publication of application: 29.09.2021
(73) Proprietor: Telefonaktiebolaget LM Ericsson (publ), 164 83 Stockholm (SE)
(72) Inventor: CHEN, Qian, 431 49 Mölndal (SE); HEDMAN, Peter, 252 50 Helsingborg (SE); ZHU, Jinyin, Shanghai 200335 (CN); GAN, Juying, Shanghai 200335 (CN)
(74) Representative: Ericsson
(86) International application number: PCT/IB2019/054503
(87) International publication number: WO 2020/104861

(56) References cited:
- US-A1- 2018 199 398
- LG ELECTRONICS INC: "N2 Release Procedure", 3GPP DRAFT; S2-170234_23502_N2_RELEASE_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Spokane, Wa; 20170116 - 20170120 16 January 2017 (2017-01-16), XP051216423, Retrieved from the Internet: URL:http://www.3gpp.org/ftp/Meetings_3GPP_ SYNC/SA2/Docs/ [retrieved on 2017-01-16]
- CATT: "TS 23.502: PDU session deactivation due to mobility restriction", 3GPP DRAFT; S2-175898_TS 23.502 PDU SESSION DEACTIVATION DUE TO MOBILITY RESTRICTION, 3RD GENERATION PARTNERSHIP PROJECT (3GPP), MOBILE COMPETENCE CENTRE ; 650, ROUTE DES LUCIOLES ; F-06921 SOPHIA-ANT , vol. SA WG2, no. Sophia Antipolis, France; 20170821 - 20170825 21 August 2017 (2017-08-21), XP051325744, Retrieved from the Internet: URL:http://www.3gpp.org/ftp/Meetings_3GPP_ SYNC/SA2/Docs/ [retrieved on 2017-08-21]

## Description

### Related Application

This application claims the benefit of provisional patent application serial number PCT/CN2018/116113, filed November 19th, 2018.

### Technical Field

The invention relates to QoS flows in the 5G Architecture.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

Fourth Generation (4G) networks are now widely deployed and the Third Generation Partnership Project (3GPP) is currently developing the standards for Fifth Generation (5G) systems. When 5G networks become available, network operators are expected to deploy a mixture of 5G core (5GC) networks and Evolved Packet Core (EPC) networks.

Currently 3GPP is finalizing specifications for 5GC network in 3GPP Technical specification, TS 23.501, 3GPP TS 23.502 and 3GPP TS 23.503. The 5GC network may be based on an evolution of the current EPC or based on a "clean slate" approach. 5GC is defined over the Network Function Virtualization (NFV) and Software Defined Networking (SDN). 5GC must support various access networks including but not limited to:
- The new radio access network (New RAN), also known as the 5G Universal Terrestrial Radio Access Network (G-UTRAN), NextGen (NG) RAN or 5G/NG RAN, that supports the Evolved Long Term Evolution (eLTE) Evolved NodeBs (eNBs), also referred to as NG eNBs; and/or
- the new radio (NR) access network technology, also known as 5G Universal Terrestrial Radio Access (G-UTRA), base stations (BSs), which are also referred to as 5G NodeB (5G NB) or gNB; and/or
- Other non-3GPP access network such as a Wireless Local Area Network, WLAN.

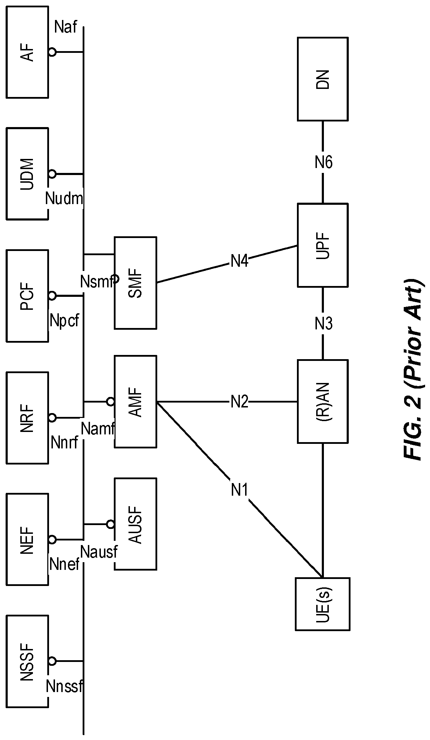

Figure 2 (Prior art) illustrates the Service based architecture of the 5G core network, 5GC. It consists of a number of Network function, NF, such as Access and Mobility Management Function, AMF, Session Management Function, SMF, Policy Control Function, PCF, etc.

The Session Management function (SMF) as specified in 3GPp TS 23.501 includes the following functionality. Some or all of the SMF functionalities may be supported in a single instance of a SMF:
- Session Management e.g. Session Establishment, modify and release, including tunnel maintain between UPF and AN node.
- UE IP address allocation & management (including optional Authorization).
- DHCPv4 (server and client) and DHCPv6 (server and client) functions.
- ARP proxying as specified in IETF RFC 1027 and / or IPv6 Neighbour Solicitation Proxying as specified in IETF RFC 4861 functionality for the Ethernet PDUs. The SMF responds to the ARP and / or the IPv6 Neighbour Solicitation Request by providing the MAC address corresponding to the IP address sent in the request.
- Selection and control of UP function, including controlling the UPF to proxy ARP or IPv6 Neighbour Discovery, or to forward all ARP/IPv6 Neighbour Solicitation traffic to the SMF, for Ethernet PDU Sessions.
- Configures traffic steering at UPF to route traffic to proper destination.
- Termination of interfaces towards Policy control functions.
- Lawful intercept (for SM events and interface to LI System).
- Charging data collection and support of charging interfaces.
- Control and coordination of charging data collection at UPF.
- Termination of SM parts of NAS messages.
- Downlink Data Notification.
- Initiator of AN specific SM information, sent via AMF over N2 to AN.
- Determine SSC mode of a session.
- Roaming functionality:
- Handle local enforcement to apply QoS SLAs (VPLMN).
- Charging data collection and charging interface (VPLMN).
- Lawful intercept (in VPLMN for SM events and interface to Ll System).
- Support for interaction with external DN for transport of signalling for PDU Session authorization/authentication by external DN.

In addition to the functionalities of the SMF described above, the SMF may include policy related functionalities as described in clause 6.2.2 in 3GPP TS 23.503
3GPP 5G and 5GC introduce a different QoS framework compared to the 4G and EPC QoS framework. 5G supports a flow based QoS model, while 4G is based on bearer level QoS. 5G specifies a guaranteed bit rate (GBR) QoS flow and a non-guaranteed bit rate (Non-GBR or NGBR) QoS flow which is equivalent to 4G GBR bearer, and non- Non-GBR or NGBR bearer. In 4G and EPC, each bearer has an associated QoS Class Identifier (QCI) and an Allocation and Retention Priority (ARP) and then each QCI, i.e., each bearer, is characterized by priority, packet delay budget and acceptable packet loss rate. QoS is hence specified per bearer where a bearer may transport one or more media flows sharing the same QoS characteristics of the bearer. On the other hand, QoS in 5G is defined at the flow level where at the gNB, the Service Data Adaptation Protocol (SDAP) sublayer configured by the Radio Resource Control (RRC) sublayer, maps QoS flows to radio bearers. One or more QoS flows may be mapped onto one radio bearer. The 5G QoS Identifier (5QI) is a scalar that is used as a reference to 5G QoS characteristics to control QoS forwarding treatment for the QoS Flow (e.g. scheduling weights, admission thresholds, queue management thresholds, link layer protocol configuration, etc.). 5QI is similar to the QoS class identifier (QCI) of 4G. In addition, a QoS Flow ID (QFI) is used to identify a QoS flow in the 5G system. User Plane traffic with the same QFI within a Protocol Data Unit (PDU) session receives the same traffic forwarding treatment (e.g. scheduling, admission threshold), i.e., 5QI. The QFI is carried in an encapsulation header on N3 (Reference point between RAN and User Plane Function (UPF) in 5GC). The QFI is hence unique within a PDU session in 5G.
Within the 5G system, a QoS Flow is controlled by the SMF and may be preconfigured, or established via the PDU Session Establishment procedure (see TS 23.502, clause 4.3.2), or the PDU Session Modification procedure (see TS 23.502 clause 4.3.3.
Any QoS Flow is characterised by:
- A QoS profile provided by the SMF to the Access Node, AN (gNB) via the AMF over the N2 reference point or preconfigured in the AN;
- One or more QoS rule(s) and optionally QoS Flow level QoS parameters (as specified in TS 24.501) associated with these QoS rule(s) which can be provided by the SMF to the UE via the AMF over the N1 reference point and/or derived by the UE by applying Reflective QoS control; and
- One or more Uplink, UL and Downlink, DL PDR(s) provided by the SMF to the UPF.

Within the 5G System, a QoS Flow associated with the default QoS rule is required to be established for a PDU Session and remains established throughout the lifetime of the PDU Session. This QoS Flow should be a Non-GBR QoS Flow and provides the UE with connectivity throughout the lifetime of the PDU Session.
3GPP TS 23.502 has defined an Access Network Release procedure which is used to release the logical NG-AP signalling connection (N2 connection) and the associated N3 User Plane connections, and (R)AN RRC signalling and resources. 3GPP TS 23.502 describes that when the AN Release procedure specified in Clause 4.2.6 of 3GPP TS 23.502, is triggered due to radio reasons, e.g., Radio connection with UE lost, the SMF shall trigger the GBR QoS flows deactivation. The following is an excerpt from clause 4.2.6 of 3GPP TS 23.502"
"If the cause of AN Release is because of User Inactivity, or UE Redirection, the SMF shall preserve the GBR QoS Flows. Otherwise, the SMF shall trigger the PDU Session Modification procedure (see clause 4.3.3) for the GBR QoS Flows of the UE after the AN Release procedure is completed."
TS23.502 has also defined the Network Triggered Service Request procedure (see clause 4.2.3.3 of 3GPP TS 23.502, where the AMF sends
Namf_Communications_N1N2MessageTransfer Failure Notification to the SMF if the UE does not respond to the paging.

Document "N2 Release Procedure", LG Electronics Inc., 3GPP draft, S2-170234, discloses an addition of an N2 release procedure for CM state transition by releasing N2 and N3 connections for the 5G System. The suggested basic N2 release procedure is mostly based on the S1 release procedure in EPS referring TS 23.401 and TS 23.214 for N4 interaction in a similar manner to Sxa interaction.

Document US 2018/199398 A1 discloses a network architecture and methods of managing packet data unit (PDU) sessions in a network. The methods include PDU session establishment procedures, PDU session modification procedures, PDU session state transfer procedures, PDU session release procedures, and user equipment (UE) handover procedures.

### Summary

Few challenges exist with the existing deactivation of the GBR QoS flows procedure. In a network where asynchronous type communication, ATC, is not deployed, when SMF triggers the PDU Session Modification procedure to deactivate the GBR QoS flows, e.g., 5QI=1 QoS flow for voice service, if the UE is not reachable, there will be misalignment of QoS rules and QoS flows status between UE and SMF, which will cause negative impact on user experience.

Two typical use cases are described below:
- The procedure is triggered because of AN release procedure caused by radio connection problem (e.g., Radio connection with UE lost). In this case the immediate paging from AMF will likely fail since the UE has not regained the radio connection yet.
- The procedure is triggered because of PCF initiated SM Policy Association Modification procedure, and UE happens to not be reachable.

In both cases, the GBR QoS flows and/or non-GBR QoS Flow that is not associated to the default QoS Rule, deactivation has to be executed in network side anyway, e.g., in SMF and PCF. For IMS voice call case, the IMS domain also should treat the relevant voice service as being terminated immediately.

The existing technology lacks a way to retry the QoS flows deactivation towards UE, which results in the misalignment of QoS rules and QoS flows status between UE and SMF.

Subsequently, when the UE regains the radio connection and starts the uplink data transfer again, the data corresponding to such deactivated QoS flows either cannot be matched to radio resource or will be dropped by NG-RAN. This will have negative impact on user experience.

NOTE: according to 3GPP TS 23.502, if ATC feature is activated, AMF updates and stores the UE context based on the PDU Session Modification request. In this case, the GBR QoS flows deactivation can be notified to the UE the next time the UE enters CM Connected state. However, ATC feature probably does not apply here since, e.g., for IMS voice case, some information such as access network information is needed during the SMF triggered PDU Session Modification procedure.

To mitigate the above challenges, methods and apparatus embodiments are provided for synchronizing the status of the QoS Flows between the UE and the 5GC. The unsynchronized QoS Flow status may happen when the network initiated QoS Flow deletion cannot reach the UE e.g. due to radio link failure or UE not responding.

Without such solutions, a QoS Flow may be deleted in the 5GC but not in the UE, and the UL packets sent via such QoS Flow will get dropped by the UPF in 5GC because QFI of the QoS Flow is not recognized by the UPF.

According to the present disclosure, methods, a network node, a wireless device, computer programs and carriers according to the independent claims are provided. Developments are set forth in the dependent claims.

In accordance with one aspect, when the Session Management Function, SMF, in 5GC, would like to delete a QoS Flow (which is not the "default QoS Flow") in the UE, if there is no response from UE, e.g. due to radio link failure, or paging no response, the SMF marks that the status of those GBR QoS Flows are to be synchronized with the UE.

At Service Request, for a PDU Session that the SMF has determined to accept the activation of UP connection, the SMF also checks if there is any QoS Flow that is deleted in the 5GC but not synchronized with the UE yet. If such QoS Flows exist, the SMF includes the PDU Session Modification Command in N1 SM Container to delete those QoS Flows.
NOTE: "Default QoS Flow" refer to the QoS Flow associated with the default QoS rule

According to one aspect, for an SMF, the embodiments described provide for continuing with the GBR QoS flows deactivation towards the PCF (which then notifies the IMS domain for the IMS voice service scenario) while deferring the GBR QoS flows deactivation towards the UE in the below cases:
- AN release procedure caused by radio connection problem (e.g., Radio connection with lost UE).
- During SMF triggered PDU Session Modification procedure to deactivate the GBR QoS flows which is caused by network side, e.g., PCF initiated SM Policy Association Modification procedure, the SMF is notified of the UE not responding from Namf_Communications_N1 N2MessageTransfer Failure Notification.

Deactivation by the SMF to the UE of the GBR QoS flow(s) and/or the non-GBR QoS flow(s) that is (Are) not associated with the default QoS Rule, can thus be performed later on when:
- there is signaling from the AMF to the SMF (e.g., for activating the user plane for the corresponding PDU session),
- the SMF is notified of the UE reachability (applicable for the case that SMF has subscribed to this UE reachability notification), or
- a guard timer expires. The guard timer is started when SMF decides to deactivate the GBR QoS flows during AN release procedure or when SMF receives Namf_Communications_N1 N2MessageTransfer Failure Notification.

According to other aspects, for UE initiated GBR QoS flows (or non-GBR QoS flows not associated to default QoS Rule) deactivation due to radio connection problem, the solution is to defer the GBR (and/or non-GBR) QoS flows deactivation towards SMF and reinitiate it when the UE regains the radio connection. Note that the non-GBR QoS flows described herein are not associated to a default QoS Rule, else deactivation of such QoS flow would result in deactivation of the PDU session.

Beside explicitly deactivating the GBR/non-GBR QoS flows, the SMF and the UE may use a new information element to synchronize QoS rules and QoS flows status. This new information element represents the overall QoS rules and QoS flows status, i.e., for each QoS rule and QoS flow, indicates whether it is active or not.

The embodiments described herein should prevent the misalignment of QoS rules and QoS flows status between SMF and UE and avoid the negative user experience.

In one aspect, a method of operation of a network node implementing a Session Management Function, SMF, in a core network of a cellular communications system is provided. The method comprises initiating deactivation, for a Packet Data Unit, PDU, session of a User Equipment, UE, of at least one of a Guaranteed bit rate, GBR, Quality of Service, QoS, flow and a non-GBR QoS flow that is not associated to a default QoS rule and upon determining that a response to the deactivation is not received from the UE, deferring the deactivation of the at least one of the GBR QoS flow and the non-GBR QoS flow associated with the PDU session.

In one aspect, the method further comprises marking the at least one of the GBR QoS flow and the non-GBR QoS flow as pending synchronization with the UE. In another aspect, the method further comprises starting a synchronization timer for re-initiating the deactivation of the at least one of the GBR QoS flow and the non-GBR QoS flow with the UE.

In accordance with another aspect, the method further comprises subscribing by the SMF to notification of reachability for the UE at the Access Mobility Management function, AMF, in order for the SMF to determine that it can start synchronization of the QoS flows with the UE.

In accordance with another aspect, The method further comprises sending a request or a command to the UE to synchronize the at least one of the GBR QoS flow and the non-GBR QoS flow in response to receiving a request to activate the user plane, UP, connections for the UE; or to receiving a notification that the UE is reachable; or that the synchronization timer has expired.

In accordance with another aspect, the the request or the command initiated by the SMF to synchronize the GBR QoS flow and/or the non-GBR QoS flow with the UE comprise a QoS rule status and a QoS flow status indicating the GBR QoS flow and/or the non-GBR QoS Flow to synchronize or indicating the GBR QoS flow and/or non-GBR QoS Flow that are deleted in the SMF.

In accordance with another aspect, a network node implementing a Session Management Function, SMF in a core network of a cellular communications system is provided and adapted to perform any of the embodiments described herein.

In accordance with another aspect, a network node implementing a Session Management Function, SMF in a core network of a cellular communications system, comprises one or more processors; and memory comprising instructions executable by the one or more processors whereby the network node is adapted to perform any of the embodiments described herein.

In another aspect, a network node implementing a Session Management Function, SMF in a core network of a cellular communications system, comprises one or more modules operable to perform any of the embodiments described herein.

According to one aspect, a method of operation of a wireless device, having an established Packet Data Unit, PDU, Session, with a Core network and the PDU session has at least a GBR QoS Flow and/or a non-GBR QoS flow that is not associated to the default QoS rule, is provided. The method comprises UE locally deactivating the GBR QoS flow and/or the non-GBR QoS Flow that is not associated to the default QoS Rule of the Packet Data Unit, PDU, session and upon determining that the Core network is not reachable, the UE will defer synchronization of the GBR QoS flow and/or the non-GBR QoS Flow that is not associated with the default QoS Rule. Upon reconnecting with the Core Network, sending a request to the Core Network to synchronize the GBR QoS flow and/or the non-GBR QoS Flow that is not associated with the default QoS Rule.

In another aspect, determining that the Core network is not reachable is due to UE having/detecting poor radio conditions.

In another aspect, the request to synchronize the GBR QoS flow and/or the non-GBR QoS Flow consists of a NAS PDU Session Modification request message and the request may further comprise a QoS Rules status and a QoS Flow status.

In accordance with one aspect, a wireless device is adapted to perform the any of the embodiments described herein.

In accordance with another aspect, a wireless device comprises one or more processors; and memory comprising instructions executable by the one or more processors whereby the wireless is adapted to perform any of the embodiments described herein.

In accordance with another aspect, a wireless device comprises one or more modules operable to perform any of the embodiments described herein.

This summary is not an extensive overview of all contemplated embodiments and is not intended to identify key or critical aspects or features of any or all embodiments or to delineate the scope of any or all embodiments. In that sense, other aspects and features will become apparent to those ordinarily skilled in the art upon review of the following description of specific embodiments in conjunction with the accompanying figures.

### Brief description of the drawings

The accompanying drawing figures incorporated in and forming a part of this specification illustrate several aspects of the disclosure, and together with the description serves to explain the principles of the disclosure.
Figure 1 illustrates an example of a telecommunication system.
Figure 2 (prior art) illustrates a 5GC SBA architecture as specified in 3GPP TS 23.501.
Figure 3 illustrates a flow diagram describing an SMF that defers QoS Flow deactivation according to an embodiment.
Figure 4 illustrates a flow diagram describing an SMF that defers QoS Flow deactivation according to an embodiment.
Figure 5 (Prior Art) illustrates a flow diagram of a UE Service Request as specified in 3GPP TS 23.502.
Figure 6 (Prior art) illustrates a flow diagram of UE or network requested PDU Session Modification (for non-roaming and roaming with local breakout) as specified in 3GPP TS 23.502.
Figure 7 illustrates a method of operation of an SMF in accordance with an embodiment.
Figure 8 illustrates a method of operation of a UE in accordance with an embodiment.
Figure 9 illustrates a circuitry of a network node implementing an SMF according to an embodiment.
Figure 10 illustrates a circuitry of a virtualized network node implementing an SMF, according to another embodiment.
Figure 11 illustrates a circuitry of a network node implementing an SMF according to an embodiment.
Figure 12 illustrates a circuitry of a UE according to an embodiment.
Figure 13 illustrates a circuitry of a UE according to another embodiment.

### Description

In the following description, numerous specific details are set forth. However, it is understood that embodiments may be practiced without these specific details. In other instances, well-known circuits, structures, and techniques have not been shown in detail in order not to obscure the understanding of the description. Those of ordinary skill in the art, with the included description, will be able to implement appropriate functionality without undue experimentation.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to implement such feature, structure, or characteristic in connection with other embodiments whether or not explicitly described.

As used herein, the singular forms "a", "an" and "the" are intended to include the plural forms as well, unless the context clearly indicates otherwise. It will be further understood that the terms "comprises," "comprising," "includes," and/or "including" when used herein, specify the presence of stated features, integers, steps, operations, elements, and/or components, but do not preclude the presence or addition of one or more other features, integers, steps, operations, elements, components, and/or groups thereof.

In the present disclosure, a wireless device is a non-limiting term and refers to a device capable, configured, arranged and/or operable to communicate wirelessly with network nodes and/or another wireless device. Communicating wirelessly may involve transmitting and/or receiving wireless signals using electromagnetic signals, radio waves, infrared signals, and/or other types of signals suitable for conveying information through air. In particular embodiments, wireless devices may be configured to transmit and/or receive information without direct human interaction. For instance, a wireless device may be designed to transmit information to a network on a predetermined schedule, when triggered by an internal or external event, or in response to requests from the network. Generally, a wireless device may represent any device capable of, configured for, arranged for, and/or operable for wireless communication, for example radio communication devices. Examples of wireless devices include, but are not limited to, user equipment (UE) such as smart phones. Further examples include wireless cameras, wireless-enabled tablet computers, laptop-embedded equipment (LEE), laptop-mounted equipment (LME), USB dongles, and/or wireless customer-premises equipment (CPE).

As one specific example, a wireless device may represent a UE configured for communication in accordance with one or more communication standards promulgated by the 3rd Generation Partnership Project (3GPP), such as 3GPP's LTE, and/or 5G standards. As used herein, a "user equipment" or "UE" may not necessarily have a "user" in the sense of a human user who owns and/or operates the relevant device. Instead, a UE may represent a device that is intended for sale to, or operation by, a human user but that may not initially be associated with a specific human user.

The wireless device may support device-to-device (D2D) communication, for example by implementing a 3GPP standard for sidelink communication and may in this case be referred to as a D2D communication device.

As yet another specific example, in an Internet of Things (IOT) scenario, a wireless device may represent a machine or other device that performs monitoring and/or measurements and transmits the results of such monitoring and/or measurements to another wireless device and/or a network node. The wireless device may in this case be a machine-to-machine (M2M) device, which may in a 3GPP context be referred to as a machine-type communication (MTC) device. As one particular example, the wireless device may be a UE implementing the 3GPP narrow band internet of things (NB-loT) standard. Particular examples of such machines or devices are sensors, metering devices such as power meters, industrial machinery, or home or personal appliances, e.g. refrigerators, televisions, personal wearables such as watches etc. In other scenarios. A wireless device such as a UE may be used as router or a relay for these internet of things devices that connect to the network via the UE. A wireless device may also represent a vehicle or other equipment that is capable of monitoring and/or reporting on its operational status or other functions associated with its operation.

A wireless device as described above may represent the endpoint of a wireless connection, in which case the device may be referred to as a wireless terminal. Furthermore, a wireless device as described above may be mobile, in which case it may also be referred to as a mobile device or a mobile terminal. The term User Equipment, UE, is used henceforth to describe the embodiments, however wireless device and user equipment may sometimes be used interchangeably.

As used herein, "network node" refers to equipment capable, configured, arranged and/or operable to communicate directly or indirectly with a wireless device and/or with other equipment in the wireless communication network, such as 5GC that enable and/or provide to the wireless device access to one or more data networks. Examples of network nodes used in the embodiments herein include, but are not limited to 5GC entities implementing session management function, SMF, policy control function, PCF, and user plane function, and an Access and an AMF. If the DN is an IMS, the AF is a P-CSCF.

More generally, network nodes may represent any suitable device (or group of devices) capable, configured, arranged, and/or operable to enable and/or provide a wireless device access to the data network over the wireless communication network (5GC) or to provide some service to a wireless device that has accessed the wireless communication network.

In context of 5GC and the present disclosure some definitions are useful:
- QoS Flow: The QoS Flow is the finest granularity of QoS differentiation in the PDU Session. A QoS Flow ID (QFI) is used to identify a QoS Flow in the 5G System. User Plane traffic with the same QFI within a PDU Session receives the same traffic forwarding treatment (e.g. scheduling, admission threshold). The QFI is carried in an encapsulation header on N3 (and N9) i.e. without any changes to the e2e packet header. QFI shall be used for all PDU Session Types. The QFI shall be unique within a PDU Session. The QFI may be dynamically assigned or may be equal to the 5QI. QoS Flow is controlled by an SMF.
- QoS Rules: A QoS rule contains the QFI of the associated QoS Flow, a Packet Filter Set identifying the data flows and a precedence value. An explicitly signalled QoS rule contains a QoS rule identifier which is unique within the PDU Session and is generated by SMF.
- Default QoS rule: is required to be sent to the UE for every PDU Session establishment and it is associated with a QoS Flow. For IP type PDU Session or Ethernet type PDU Session, the default QoS rule is the only QoS rule of a PDU Session whose Packet Filter Set may contain a packet filter that allows all UL packets, and in this case, the highest precedence value shall be used for the QoS rule.The filter in the Packet Filter Set of the default QoS rule that allows all UL traffic (also known as match-all filter) is described in 3GPP TS 24.501.
- QoS Profile: A QoS Flow may either be 'GBR' or 'Non-GBR' depending on its QoS profile. The QoS profile of a QoS Flow is sent to the (R)AN and it contains the following QoS parameters:
   ▪ For each QoS Flow, the QoS profile shall include the 5QI and the ARP:
      ▪ For each Non-GBR QoS Flow only, the QoS profile may also include the Reflective QoS Attribute (RQA).
      ▪ For each GBR QoS Flow only, the QoS profile shall also include Guaranteed Flow Bit Rate (GFBR), UL and DL, Maximum Flow Bit Rate (MFBR) - UL and DL, and in the case of a GBR QoS Flow only, the QoS profile may also include one or more of the QoS parameters such as Notification control and Maximum Packet Loss Rate - UL and DL.

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

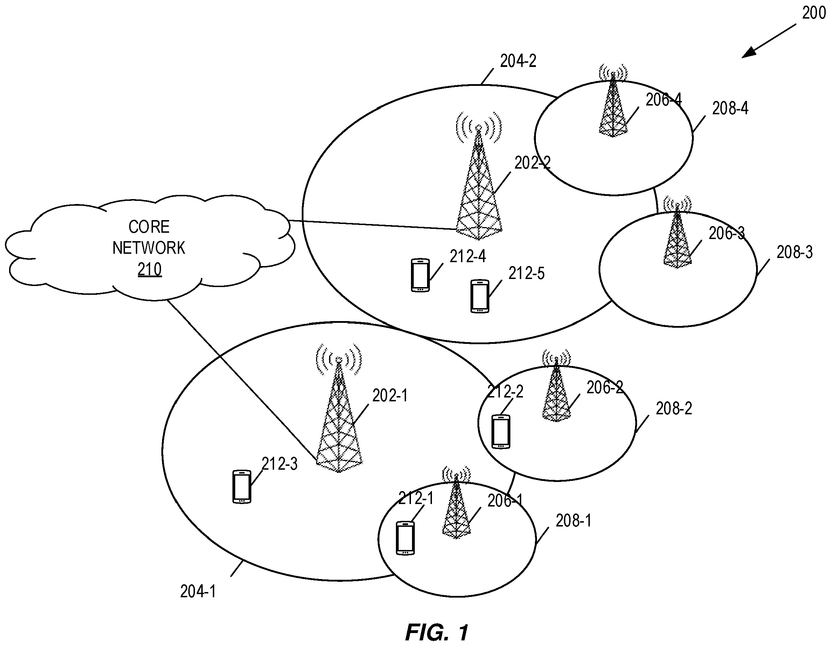

Figure 1 illustrates one example of a cellular communications network 200 according to some embodiments of the present disclosure. In the embodiments described herein, the cellular communications network 200 is a 5G NR network. In this example, the cellular communications network 200 includes base stations 202-1 and 202-2, which in LTE are referred to as eNBs and in 5G NR are referred to as gNBs, controlling corresponding macro cells 204-1 and 204-2. The base stations 202-1 and 202-2 are generally referred to herein collectively as base stations 202 and individually as base station 202. Likewise, the macro cells 204-1 and 204-2 are generally referred to herein collectively as macro cells 204 and individually as macro cell 204. The cellular communications network 200 may also include a number of low power nodes 206-1 through 206-4 controlling corresponding small cells 208-1 through 208-4. The low power nodes 206-1 through 206-4 can be small base stations (such as pico or femto base stations) or Remote Radio Heads (RRHs), or the like. Notably, while not illustrated, one or more of the small cells 208-1 through 208-4 may alternatively be provided by the base stations 202. The low power nodes 206-1 through 206-4 are generally referred to herein collectively as low power nodes 206 and individually as low power node 206. Likewise, the small cells 208-1 through 208-4 are generally referred to herein collectively as small cells 208 and individually as small cell 208. The base stations 202 (and optionally the low power nodes 206) are connected to a core network 210.

The base stations 202 and the low power nodes 206 provide service to wireless devices 212-1 through 212-5 in the corresponding cells 204 and 208. The wireless devices 212-1 through 212-5 are generally referred to herein collectively as wireless devices 212 and individually as wireless device 212. The wireless devices 212 are also sometimes referred to herein as UEs.

Figure 2 illustrates a 5G network architecture using service-based interfaces between the NFs in the control plane. Seen from the access side the 5G network architecture shown in Figure 2 comprises a plurality of User Equipment (UEs) connected to either a Radio Access Network (RAN) or an Access Network (AN) as well as an Access and Mobility Management Function (AMF). Typically, the R(AN) comprises base stations, e.g. such as evolved Node Bs (eNBs) or 5G base stations (gNBs) or similar. Seen from the core network side, the 5G core NFs shown in Figure 2 include a Network Slice Selection Function (NSSF), an Authentication Server Function (AUSF), a Unified Data Management (UDM), an AMF, a Session Management Function (SMF), a Policy Control Function (PCF), and an Application Function (AF). The service(s) etc. that a NF provides to other authorized NFs can be exposed to the authorized NFs through the service-based interface. In Figure 2, the service based interfaces are indicated by the letter "N" followed by the name of the NF, e.g. Namf for the service based interface of the AMF and Nsmf for the service based interface of the SMF etc.

Some properties of the NFs shown in Figure 2 may be described in the following manner. The AMF provides UE-based authentication, authorization, mobility management, etc. A UE even using multiple access technologies is basically connected to a single AMF because the AMF is independent of the access technologies. The SMF is responsible for session management and allocates Internet Protocol (IP) addresses to UEs and QoS. It also selects and controls the UPF for data transfer. The AF provides information on the packet flow to the PCF responsible for policy control in order to support Quality of Service (QoS). Based on the information, the PCF determines policies about mobility and session management to make the AMF and SMF operate properly. The AUSF supports authentication function for UEs or similar and thus stores data for authentication of UEs or similar while the UDM stores subscription data of the UE. The Data Network (DN), not part of the 5G core network, provides Internet access or operator services and similar.

An NF may be implemented either as a network element on a dedicated hardware (network node), as a software instance running on a dedicated hardware, or as a virtualized function instantiated on an appropriate platform, e.g., a cloud infrastructure.

Currently there is synchronization of PDU Sessions between the UE and the 5GC at Service Request or Registration procedure, based on the PDU Session status.

However, for an active PDU session, there is no synchronization of the QoS Flows that are not associated with the default QoS rule (denoted as "dedicated QoS Flow" to simplify) within the PDU Session.

If the UE cannot be reached (e.g. due to radio connection lost) when the "dedicated QoS Flow" is deleted by the network, the QoS Flow status between the UE and the SMF will not be synchronized. As a consequence, the UE may send UL packets using the QFI of a QoS Flow that has been deleted by the network. Such packets will be sent over the default DRB as per 3GPP TS 38.300 Annex 6 (copied below)

### Annex A.6 UE Initiated UL QoS Flow

*0*. *PDU session and DRBs (including a default DRB) have been already established.*

*1. UE AS receives* a *packet with a new QFI from UE NAS.*

*2. UE uses the QFI of the packet to map it to a DRB. If there is no mapping of the QFI to a DRB in the AS mapping rules for this PDU session, then the packet is assigned to the default DRB.*

*3. UE sends the UL packet on the default DRB. The UE includes the QFI in the SDAP header.*

*4. gNB sends UL packets to UPF and includes the corresponding QFI.*

*5. If gNB wants to use a new DRB for this QoS flow, it sets up one. It can also choose to move the QoS flow to an existing DRB using RQoS or RRC signalling (see subclauses A.2 and A.3).*

*6. User Plane Data for the new QoS flow can then be exchanged between UE and gNB over the DRB according to the updated mapping rules and between UPF and gNB over the tunnel for the PDU session.*

When such packets reach UPF, the QFI of those packets is not recognized and the packets get dropped.

Two options can mitigate the above problem, i.e., to synchronize the status of "dedicated QoS Flows" between the UE and the 5GC:

### Option-1 UE controlled synchronization

UE includes the QoS Flow Status IE (in Registration Request and Service Request) for each PDU Session if its UP connection is to be activated.

### Option-2 Network controlled synchronization

When the network decides to delete a dedicated QoS Flow, and the UE cannot be reached, the SMF mark the QoS Flow that it's to be deleted in UE.

When the SMF becomes aware that the UE is reachable (e.g. at Service Request, or Registration Request), the SMF trigger the deletion towards the UE.

For Option-1, as each PDU Session can have max 63 QoS Flows, the increased size of the NAS message due to QoS Flow status can reach N*8 bytes (N is the number of PDU Sessions to be activated), Although one may implement option 1, more detail description is provided with respect to option 2.

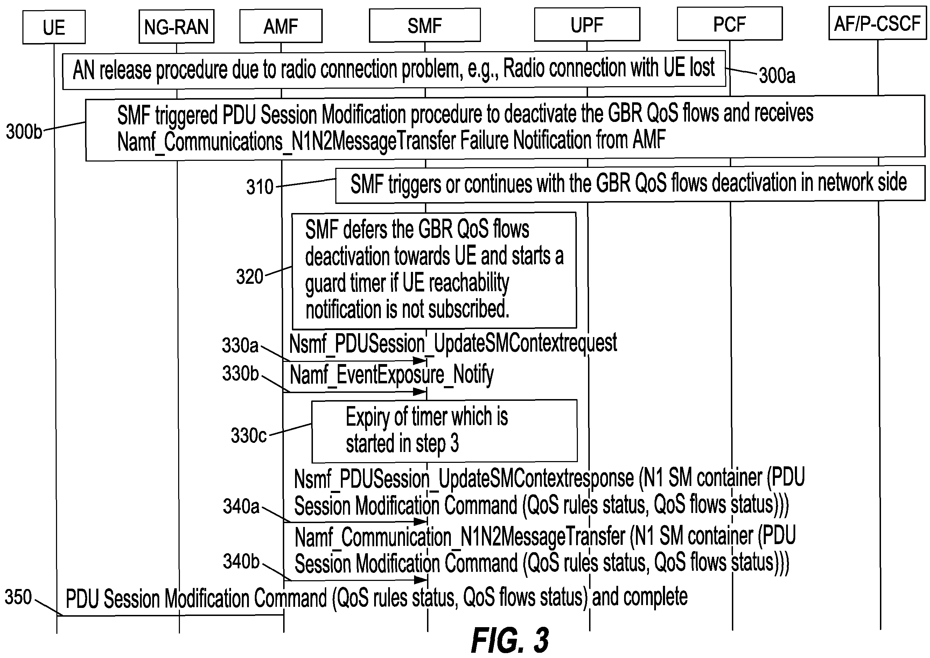

Figure 3 illustrates a flow diagram of an SMF deferring QoS flows deactivation, in accordance with an embodiment. The following steps of the flow diagram are described with respect to the Figure 3.
Step 300a: AN release procedure is triggered due to radio connection problem, e.g., radio connection with UE lost; and Step 300b, the SMF triggers PDU Session Modification procedure to deactivate the GBR QoS flows and receives Namf_Communications_N1N2MessageTransfer Failure Notification from AMF indicating the UE (or Wireless Device, WD) is not responding.
Step 310: SMF triggers or continues with deactivation of GBR QoS flows in network side. If the GBR QoS flows corresponding to service data flows from AF/P-CSCF, PCF further notifies AF/P-CSCF.
Step 320: SMF defers the GBR QoS flows deactivation towards UE. If SMF has not subscribed the UE reachability notification from AMF, **SMF either subscribes it or starts a guard timer.**
Step 330a: The SMF receives a message from AMF, e.g., Nsmf_PDUSession_UpdateSMContext request for activating the user plane, for this PDU session, or SMF receives the Namf_EventExposure_Notify from AMF indicating UE reachability at Step 330b, or alternatively, at Step 330c the guard timer if started at step 320 expires.
Step 340a is sent in response to step 330 a) SMF sends the Nsmf_PDUSession_UpdateSMContext response to AMF. In this message, the NAS message PDU Session Modification Command is included. In the Authorized QoS rules and Authorized QoS flow descriptions of PDU Session Modification Command, the SMF indicates the GBR QoS rules and GBR QoS flows to be deactivated respectively. If the mechanism of overall QoS rules and QoS flows status synchronization is used, SMF includes the QoS rules status and QoS flows status information in PDU Session Modification Command.
Step 350: AMF forwards the PDU Session Modification Command to UE. UE deactivates the GBR QoS rules and GBR QoS flows according to the Authorized QoS rules and Authorized QoS flow descriptions or QoS rules status and QoS flows status information sent from SMF.

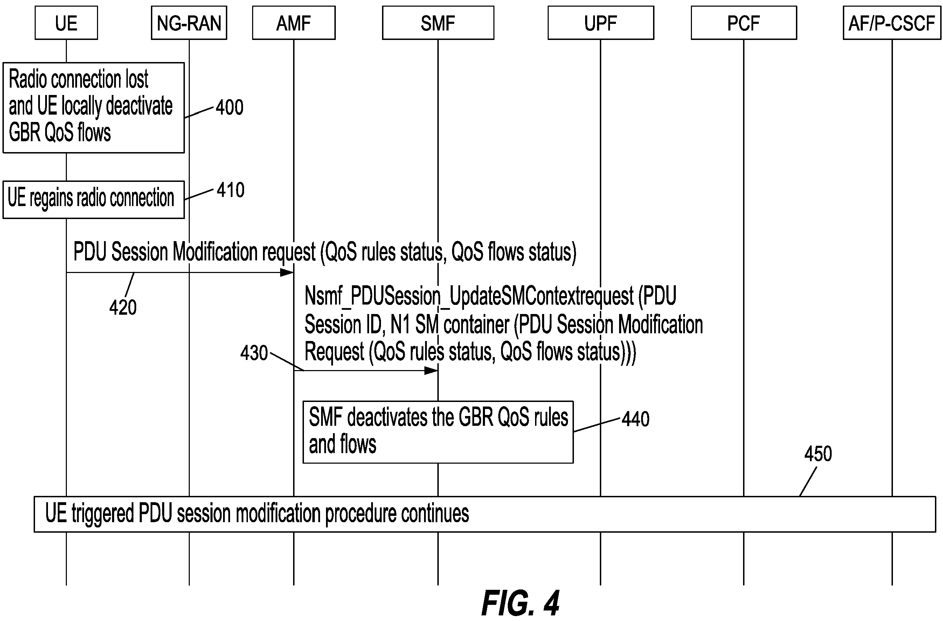

Figure 4 illustrates a flow diagram of a wireless device (UE) deferring QoS flows deactivation, in accordance with an embodiment. The following steps of the flow diagram are described with respect to Figure 4.
Step 400: The WD (or UE) locally deactivate GBR QoS flows due to, e.g., radio connection lost.
Step 410: The WD regains radio connection.
Step 420 After enters CM connected state, the WD sends PDU Session Modification request to the AMF. In Requested QoS rules and Requested QoS flow descriptions of PDU Session Modification request, the WD indicates the GBR QoS rules and GBR QoS flows to be deactivated respectively. If mechanism of overall QoS rules status synchronization is used, the WD includes the QoS rules status and QoS flows status information in PDU Session Modification request.
Step 430: The AMF sends Nsmf_PDUSession_UpdateSMContext request to SMF. In this message, PDU Session Modification request received from the WD is included.
Step 440: The SMF deactivates the GBR QoS rules and GBR QoS flows according to the Requested QoS rules and Requested QoS flow descriptions or QoS rules status and QoS flows status information sent from the WD.
Step 450: The WD triggered PDU session modification procedure continues.

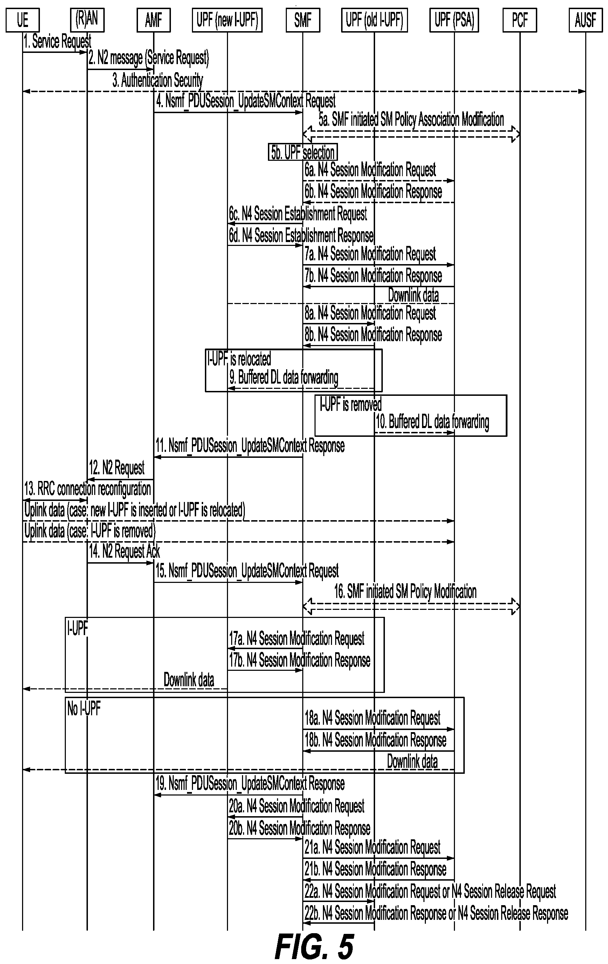

Figure 5 illustrates 3GPP standard procedure of a UE Service Request as described in 3GPP TS 23.502 standard that is impacted by the embodiments herein. The impacts or the changes to the standard procedure is now described.

### UE Triggered Service Request

As indicated, Figure 5 illustrates an embodiment of a UE service Request procedure based on the 3GPP standard procedure described in 3GPP TS 23.502. The changes to the standard UE Service Request Procedure, as a result of the embodiments described herein, are described at step 11 herein (The changes are shown in bold text and underlined). The procedure illustrates that upon receiving an indication that the UP connection is to be activated for the UE, the SMF will check if any QoS Flows' status is to be synchronized with the UE. Except for Step 11 described below, all the other steps of the UE service Request procedure are based on the current standard.

The UE in CM IDLE state initiates the Service Request procedure in order to send uplink signalling messages, user data, or as a response to a network paging request. After receiving the Service Request message, the AMF may perform authentication. After the establishment of the signalling connection to an AMF, the UE or network may send signalling messages, e.g. PDU Session establishment from UE to the SMF, via the AMF.

The Service Request procedure is used by a UE in CM-CONNECTED to request activatation of a User Plane connection for PDU Sessions and to respond to a NAS Notification message from the AMF.

For any Service Request, the AMF responds with a Service Accept message to synchronize PDU Session status between UE and network, if necessary. If the Service Request cannot be accepted by network, the AMF responds to UE with a Service Reject message. The Service Reject message may include an indication or a cause code instructing the UE to perform Registration Update procedure.

For this procedure, the impacted SMF and UPF, if any, are all under control of the PLMN serving the UE, e.g. in Home Routed roaming case the SMF and UPF in HPLMN are not involved.

For Service Request due to user data, network may take further actions if User Plane connection activation is not successful.

The procedure in this clause 4.2.3.2 of 3GPP TS 23.502 is applicable to the scenarios with or without intermediate UPF, and with or without intermediate UPF reselection.
1. UE to (R)AN: AN message (AN parameters, Service Request (List Of PDU Sessions To Be Activated, List Of Allowed PDU Sessions, security parameters, PDU Session status, 5G-S-TMSI)).

The List Of PDU Sessions To Be Activated is provided by UE when the UE wants to re-activate the PDU Session(s). The List Of Allowed PDU Sessions is provided by the UE when the Service Request is a response of a Paging or a NAS Notification for a PDU Session associated with non-3GPP access, and identifies the PDU Sessions that can be transferred to 3GPP access.

In case of NG-RAN:
- The AN parameters include 5G-S-TMSI, Selected PLMN ID and Establishment cause. The Establishment cause provides the reason for requesting the establishment of an RRC connection.
- The UE sends Service Request message towards the AMF encapsulated in an RRC message to the NG-RAN. The RRC message(s) that can be used to carry the 5G-S-TMSI and this NAS message are described in 3GPP TS 38.331 and TS 36.331.

If the Service Request is triggered by the UE for user data, the UE identifies, using the List Of PDU Sessions To Be Activated, the PDU Session(s) for which the UP connections are to be activated in Service Request message. When the UE includes the List Of PDU Sessions To Be Activated, the UE shall indicate PDU Sessions only associated with the access the Service Request is related to. If the Service Request is triggered by the UE for signalling only, the UE doesn't identify any List Of PDU Sessions To Be Activated. If this procedure is triggered for paging response, and the UE has at the same time some user data to be transferred, the UE identifies the PDU Session(s) whose UP connections are to be activated in Service Request message, by the List Of PDU Sessions To Be Activated. Otherwise the UE does not identify any PDU Session(s) in the Service Request message for paging response. In some cases (see 3GPP TS 24.501) the UE may include PDU Sessions in the List Of PDU Sessions To Be Activated even if there are no pending uplink data for those PDU Sessions or when the Service Request is triggered for signalling only or when the Service Request is triggered for paging response.

If the Service Request over 3GPP access is triggered in response to the paging or NAS Notification indicating non-3GPP access, the Service Request message shall identify the list of PDU Sessions associated with the non-3GPP access that can be re-activated over 3GPP in the List Of Allowed PDU Sessions, as described in clause 4.2.3.3 (step 6) of 3GPP TS 23.502 of this specification and in clause 5.6.8 of 3GPP TS 23.501.

The PDU Session status indicates the PDU Sessions available in the UE.

The UE shall not trigger a Service Request procedure for a PDU Session corresponding to a LADN when the UE is outside the area of availability of the LADN.

NOTE 1: A PDU Session corresponding to a LADN is not included in the List Of PDU Sessions To Be Activated when the UE is outside the area of availability of the LADN.

For UE in CM-CONNECTED state, only the List Of PDU Sessions To Be Activated and List Of Allowed PDU Sessions need to be included in the Service Request.

2. (R)AN to AMF: N2 Message (N2 parameters, Service Request.

Details of this step are described in 3GPP TS 38.413. If the AMF can't handle the Service Request it will reject it.

When NG-RAN is used, the N2 parameters include the 5G-S-TMSI, Selected PLMN ID, Location information and Establishment cause, UE Context Request.

If the UE is in CM-IDLE state, the NG-RAN obtains the 5G-S-TMSI in RRC procedure. NG-RAN selects the AMF according to 5G-S-TMSI. The Location Information relates to the cell in which the UE is camping.

Based on the PDU Session status, the AMF may initiate PDU Session Release procedure in the network for the PDU Sessions whose PDU Session ID(s) were indicated by the UE as not available.

3a) AMF to (R)AN: N2 Request (security context, Mobility Restriction List, list of recommended cells / TAs / NG-RAN node identifiers).

If the 5G-AN had requested for UE Context or there is a requirement for AMF to provide this e.g. the AMF needs to initiate fallback procedure as in clause 4.13.4.2 of 3GPP TS 23.502 for Emergency services, AMF initiates NGAP procedure as specified in 3GPP TS 38.413. For UE in CM-IDLE state, 5G-AN stores the Security Context in the UE AN context. Mobility Restriction List is described in 3GPP TS 23.501 clause 5.3.4.1 "Mobility Restrictions".

The 5G-AN uses the Security Context to protect the messages exchanged with the UE as described in 3GPP TS 33.501.

If the NG-RAN node had provided the list of recommended cells / TAs / NG-RAN node identifiers during the AN Release procedure (see clause 4.2.6 of 3GPP TS 23.502), the AMF shall include it in the N2 Request. The RAN may use this information to allocate the RAN Notification Area when the RAN decides to enable RRC Inactive state for the UE. 3. If the Service Request was not sent integrity protected or integrity protection verification failed, the AMF shall initiate NAS authentication/security procedure as defined in clause 4.6 of 3GPP TS 23.502.

If the UE in CM-IDLE state triggered the Service Request to establish a signalling connection only, after successful establishment of the signalling connection the UE and the network can exchange NAS signalling and steps 4 to 11 and 15 to 22 are skipped.

If the procedure was triggered in response to paging or NAS notification indicating non-3GPP access, and the AMF received N1 SM Container only from the SMF in step 3a of clause 4.2.3.3 of 3GPP TS 23.502, the AMF sends the NAS signalling including the N1 SM Container to the UE in step 7 of clause 4.2.3.3 of 3GPP TS 23.502 without updating the access associated to the PDU Session.

4. [Conditional] AMF to SMF: Nsmf PDUSession_UpdateSMContext Request (PDU Session ID(s), Operation Type, UE location information, Access Type, RAT Type, UE presence in LADN service area, Indication of Access Type can be changed).

The Nsmf_PDUSession_UpdateSMContext Request is invoked:
- If the UE identifies List Of PDU Sessions To Be Activated in the Service Request message;
- This procedure is triggered by the SMF but the PDU Session(s) identified by the UE correlates to other PDU Session ID(s) than the one triggering the procedure; or
- If this procedure is triggered by the SMF but the current UE location is outside the "Area of validity for the N2 SM information" provided by the SMF in step 3a of clause 4.2.3.3 of 3GPP TS 23.502. In this case the AMF shall not send the N2 information provided by the SMF in step 3a of clause 4.2.3.3. If the current UE location is in the "Area of validity for the N2 SM information", steps 4 to 11 are skipped; or
- In response to paging or NAS notification indicating non-3GPP access and the AMF received N2 SM Information only, or both N1 SM Container and N2 SM Information in step 3a of clause 4.2.3.3 of 3GPP TS 23.502.

If the DNN corresponds to an LADN then the "UE presence in LADN service area" indicates if the UE is IN or OUT of the LADN service area. If the AMF does not provide the "UE presence in LADN service area" indication and the SMF determines that the DNN corresponds to a LADN, then the SMF considers that the UE is OUT of the LADN service area.

The AMF determines the PDU Session(s) for which the UP connection(s) shall be activated and sends an Nsmf_PDUSession_UpdateSMContext Request to SMF(s) associated with the PDU Session(s) with Operation Type set to "UP activate" to indicate establishment of User Plane resources for the PDU Session(s). The AMF determines Access Type and RAT Type based on the Global RAN Node ID associated with the N2 interface.

If the procedure was triggered in response to paging or NAS Notification indicating non-3GPP access, the AMF received N2 SM Information in step 3a of clause 4.2.3.3 of 3GPP TS 23.502 and the PDU Session for which the UE was paged or notified is not in the List Of Allowed PDU Sessions provided by the UE, the AMF notifies the SMF that the UE is not reachable. For other PDU Sessions in the List Of Allowed PDU Sessions the Service Request Procedure succeeds without re-activating the User Plane of any PDU Sessions, unless they have also been included by the UE in the List Of PDU Sessions To Be Activated.

If the procedure was triggered in response to paging or NAS notification indicating non-3GPP access, and the PDU Session for which the UE was paged or notified is in the List Of Allowed PDU Sessions provided by the UE, and the AMF received N2 SM Information only or N1 SM Container and N2 SM Information from the SMF in step 3a of clause 4.2.3.3 of 3GPP TS 23.502, the AMF notifies the SMF that the access type of the PDU session can be changed. The AMF discards any already received N1 SM Container and N2 SM Information.

The AMF may receive a Service Request to establish another NAS signalling connection via a NG-RAN while it has maintained an old NAS signalling connection for UE still via NG-RAN. In this case, AMF shall trigger the AN release procedure toward the old NG-RAN to release the old NAS signalling connection as defined in clause 4.2.6 of 3GPP TS 23.502 with following logic:
- For the PDU Sessions indicated in the List Of PDU Sessions To Be Activated, the AMF requests the SMF to activate the PDU Session(s) immediately by performing this step 4.
- For the PDU Sessions indicated in the "List of PDU Session ID(s) with active N3 user plane" but not in the List Of PDU Sessions To Be Activated, the AMF requests the SMF to deactivate the PDU Session(s).

5a. [Conditional] SMF to PCF: If the AMF notified the SMF that the access type of the PDU session can be changed in step 4, and if PCC is deployed, the SMF perform an SMF initiated SM Policy Association Modification procedure as defined in clause 4.16.5.1 of 3GPP TS 23.502 if Policy Control Request Trigger condition(s) have been met (i.e. change of Access Type). The PCF may provide updated PCC Rule(s).

5b. If the PDU Session ID corresponds to a LADN and the SMF determines that the UE is outside the area of availability of the LADN based on the "UE presence in LADN service area" from the AMF, the SMF decides to (based on local policies) either:
- keep the PDU Session, but reject the activation of User Plane connection for the PDU Session and inform the AMF about it. If the procedure has been triggered by a Network Triggered Service Request as described in clause 4.3.2.3 of 3GPP TS 23.502, the SMF may notify the UPF that originated the Data Notification to discard downlink data for the PDU Sessions and/or to not provide further Data Notification messages; or
- to release the PDU Session: the SMF releases the PDU Session and informs the AMF that the PDU Session is released.
   In any case of the two cases above the SMF answers to the AMF (step10) with an appropriate reject cause and the User Plane Activation of PDU Session is stopped.
   Otherwise, based on the location info received from the AMF, the SMF checks the UPF Selection Criteria according to clause 6.3.3 of 3GPP TS 23.501, and determines to perform one of the following:
   - accepts the activation of UP connection and continue using the current UPF(s);
   - accepts the activation of UP connection and selects a new intermediate UPF (or add/remove an intermediate UPF), if the UE has moved out of the service area of the UPF that was previously connecting to the AN, while maintaining the UPF(s) acting as PDU Session Anchor. The steps to perform I-UPF addition/change/removal are described as conditional steps in the following of the current procedure; or

NOTE 2: If the old and/or new I-UPF implements an UL CL or BP functionality and a PDU Session Anchor for connectivity to the local access to the Data Network as described in 3GPP TS 23.501 clause 5.6.4.2, the signalling described in the current clause is intended as the signalling to add, remove or change the PDU Session Anchor, and must be complemented by the signalling to add, release or change the UL CL or BP as described respectively in clauses 4.3.5.4, 4.3.5.5 and 4.3.5.7 of 3GPP TS 23.502.
- rejects the activation of UP connection of a PDU Session of SSC mode 2, and trigger re-establishment of the PDU Session after Service Request procedure to perform the allocation of a new UPF to act as PDU Session Anchor, e.g. the UE has moved out of the service area of the anchor UPF which is connecting to NG-RAN.

6a. [Conditional] SMF to UPF (PSA): N4 Session Modification Request.

Depending on the network deployment, the CN Tunnel Info of UPF (PSA) allocated for N3 or N9 interface may be changed during the Service Request procedure, e.g. UPF connected to different IP domains. If the different CN Tunnel Info need be used, and the CN tunnel info is allocated by the UPF, the SMF sends N4 Session Modification Request message to UPF (PSA). If the CN Tunnel Info is allocated by the SMF, the SMF may provide updated CN tunnel info and UL Packet detection rules in step 7 instead.

6b. [Conditional] UPF (PSA) to SMF: N4 Session Modification Response. The UPF (PSA) sends an N4 Session Establishment Response message to the SMF. If the UPF (PSA) allocates CN Tunnel Info of UPF (PSA), it provides CN Tunnel Info to the SMF. The UPF (PSA) associate the CN Tunnel Info with UL Packet detection rules provided by the SMF.

6c. [Conditional] SMF to new UPF (intermediate): N4 Session Establishment Request.

If the SMF selects a new UPF to act as intermediate UPF for the PDU Session, or if the SMF selects to insert an intermediate UPF for a PDU Session which did not have an intermediate UPF, an N4 Session Establishment Request message is sent to the new UPF, providing Packet detection, Data forwarding, enforcement and reporting rules to be installed on the intermediate UPF. The CN Tunnel Info (on N9) of PSA, i.e. which is used to establish the N9 tunnel, for this PDU Session is also provided to the intermediate UPF.

If the Service Request is triggered by the network and a new UPF is selected by the SMF to replace the old (intermediate) UPF, and if UPF allocates UP tunnel endpoint information, the SMF may also include a request for the UPF to allocate a second tunnel endpoint for buffered DL data from the old I-UPF.

6d. New UPF (intermediate) to SMF: N4 Session Establishment Response. The new intermediate UPF sends an N4 Session Establishment Response message to the SMF. In case the UPF allocates CN Tunnel Info, it provides DL CN Tunnel as requested by SMF in step 6a. The SMF starts a timer, to be used in step 22a to release the resource in old intermediate UPF if there is one.

7a. [Conditional] SMF to UPF (PSA): N4 Session Modification Request.

If the SMF selects a new UPF to act as intermediate UPF for the PDU Session, the SMF sends N4 Session Modification Request message to PDU Session Anchor UPF, providing DL Tunnel Info from new intermediate UPF. The SMF may also provide updated UL CN Tunnel Information. If the new intermediate UPF was added for the PDU Session, the UPF (PSA) begins to send the DL data to the new I-UPF as indicated in the DL Tunnel Info.

If the Service Request is triggered by the network, and the SMF removes the old I-UPF but does not replace it with a new I-UPF, and if UPF allocates UP tunnel endpoint information, the SMF may also include a request for the UPF to allocate a second tunnel endpoint for buffered DL data from the old I-UPF. In this case, the UPF (PSA) begins to buffer the DL data it may receive at the same time from the N6 interface.

7b. The UPF (PSA) sends N4 Session Modification Response message to SMF.

If requested by SMF, the UPF (PSA) sends CN DL tunnel info for the old (intermediate) UPF to the SMF. The SMF starts a timer, to be used in step 22a to release the resource in old intermediate UPF if there is one.

If the UPF that connects to RAN is the UPF (PSA), and if the SMF finds that the PDU Session is activated when receiving the

Nsmf_PDUSession_UpdateSMContext Request in step 4 with Operation Type set to "UP activate" to indicate establishment of User Plane resources for the PDU Session(s), it deletes the AN Tunnel Info and initiates an N4 Session Modification procedure to remove Tunnel Info of AN in the UPF.

### 8a. [Conditional] SMF to old UPF (intermediate): N4 Session Modification Request (New UPF address, New UPF DL Tunnel ID)

If the service request is triggered by the network, and the SMF removes the old (intermediate) UPF, the SMF sends the N4 Session Modification Request message to the old (intermediate) UPF, providing the DL Tunnel Info for the buffered DL data. If the SMF allocated new I-UPF, the DL Tunnel Info is from the new (intermediate) UPF acting as N3 terminating point. If the SMF did not allocate a new I-UPF, the DL Tunnel Info is from the new UPF (PSA) acting as N3 terminating point. The SMF starts a timer to monitor the forwarding tunnel as step 6b or 7b.

If the SMF find the PDU Session is activated when receiving the Nsmf_PDUSession_UpdateSMContext Request in step 4 with Operation Type set to "UP activate" to indicate establishment of User Plane resources for the PDU Session(s), it deletes the AN Tunnel Info and initiates an N4 Session Modification procedure to remove Tunnel Info of AN in the UPF.

### 8b. old UPF (intermediate) to SMF: N4 Session Modification Response

The old (intermediate) UPF sends N4 Session Modification Response message to SMF.

### 9. [Conditional] old UPF (intermediate) to new UPF (intermediate): buffered downlink data forwarding

If the I-UPF is changed and forwarding tunnel was established to the new I-UPF, the old (intermediate) UPF forwards its buffered data to the new (intermediate) UPF acting as N3 terminating point.

### 10. [Conditional] old UPF (intermediate) to UPF (PSA): buffered downlink data forwarding

If the old I-UPF is removed and no new I-UPF is assigned for the PDU Session and forwarding tunnel was established to the UPF (PSA), the old (intermediate) UPF forwards its buffered data to the UPF (PSA) acting as N3 Terminating Point.

11. [Conditional] SMF to AMF: Nsmf PDUSession_UpdateSMContext Response (N2 SM information (PDU Session ID, QFI(s), QoS profile(s), CN N3 Tunnel Info, S-NSSAI, User Plane Security Enforcement, UE Integrity Protection Maximum Data Rate), N1 SM Container, Cause) to the AMF. If the UPF that connects to RAN is the UPF (PSA), the CN N3 Tunnel Info is the UL Tunnel Info of the UPF (PSA). If the UPF that connects to RAN is the new intermediate UPF, the CN N3 Tunnel Info is the UL Tunnel Info of the intermediate UPF.

The SMF shall send N1 SM Container and/or N2 SM Information to the AMF when applicable. (e.g. when the SMF was notified from the AMF that the access type of the PDU Session can be changed in step 4).

For a PDU Session that the SMF has determined to accept the activation of UP connection in step 5a or 5b, the SMF generates only N2 SM information and sends Nsmf_PDUSession_UpdateSMContext Response to the AMF to establish the User Plane(s). The N2 SM information contains information that the AMF shall provide to the NG-RAN. If the SMF decided to change the PSA UPF for the SSC mode 3 PDU Session, the SMF triggers the change of SSC mode 3 PDU Session anchor as an independent procedure described in clause 4.3.5.2 of 3GPP TS 23.502 or clause 4.3.5.3 of 3GPP TS 23.502 after accepting the activation of UP of the PDU Session.

**For a PDU Session that the SMF has determined to accept the activation of UP connection in step 5a or 5b, the SMF also checks if there is any QoS Flow that is deleted in the 5GC but not synchronized with the UE yet. If such QoS Flows exist, the SMF includes the PDU Session Modification Command in N1 SM Container to delete those QoS Flows.**

The SMF can reject the activation of UP of the PDU Session by including a cause in the Nsmf_PDUSession_UpdateSMContext Response. Following are some of the cases:
- If the PDU Session corresponds to a LADN and the UE is outside the area of availability of the LADN as described in step 5b;
- If the AMF notified the SMF that the UE is reachable only for regulatory prioritized service, and the PDU Session to be activated is not for a regulatory prioritized service; or
- If the SMF decided to change the PSA UPF for the requested PDU Session as described in step 5b. In this case, after sending Nsmf_PDUSession_UpdateSMContext Response, the SMF triggers another procedure to instruct UE to re-establish the PDU Session as described in clause 4.3.5.1 of 3GPP TS 23.502 for SSC mode 2.
- If the SMF received negative response in Step 6b due to UPF resource unavailability.

If the PDU Session has been assigned any EPS bearer ID, the SMF also includes the mapping between EPS bearer ID(s) and QFI(s) into the N2 SM information to be sent to the NG-RAN.

The User Plane Security Enforcement information is determined by the SMF upon PDU session establishment as described in clause 5.10.3 of3GPP TS 23.501. If the User Plane Security Enforcement information indicates that Integrity Protection is "Preferred" or "Required", the SMF also includes the UE Integrity Protection Maximum Data Rate.

12. AMF to (R)AN: N2 Request (N2 SM information received from SMF, security context, Mobility Restriction List, Subscribed UE-AMBR, MM NAS Service Accept, list of recommended cells / TAs / NG-RAN node identifiers, UE Radio Capability, Core Network Assistance Information, Tracing Requirements). The Allowed NSSAI for the Access Type for the UE is included in the N2 message. If the subscription information includes Tracing Requirements, the AMF includes Tracing Requirements in the N2 Request.

If the UE triggered the Service Request while in CM-CONNECTED state, only N2 SM information received from SMF and MM NAS Service Accept are included in the N2 Request.

If the Service Request procedure is triggered by the Network (as described in clause 4.2.3.3 of 3GPP TS 23.502) while the UE is in CM-CONNECTED state, only N2 SM information received from SMF is included in the N2 Request.

If the Service Request procedure is triggered by the Network (as described in clause 4.2.3.3 of 3GPP TS 23.502) while the UE is in CM-IDLE state, only N2 SM information received from SMF and MM NAS Service Accept is included in the N2 Request.

For a UE that was in CM-IDLE state when the Service Request was triggered, the NG-RAN stores the Security Context. If the Service Request is not triggered by UE for a signalling connection only, RAN also stores QoS Information for the QoS Flows of the PDU Sessions that are activated and N3 Tunnel IDs in the UE RAN context and Mobility Restriction List (as described in 3GPP TS 23.501 clause 5.3.4.1).

MM NAS Service Accept includes PDU Session status in AMF. Any local PDU Session Release during the Session Request procedure is indicated to the UE via the Session Status. PDU Session Reactivation Result is provided in Service Accept for the PDU sessions in the List Of PDU Sessions To Be Activated, and the PDU Session in the List of Allowed PDU Sessions which has caused paging or NAS notification. If the PDU Session Reactivation Result of a PDU Session is failure, the cause of the failure is also provided.

If there are multiple PDU Sessions that involves multiple SMFs, AMF does not need to wait for responses from all SMFs in step 11 before it send N2 SM information to the RAN. However, the AMF shall wait for all responses from the SMFs before it sends MM NAS Service Accept message to the UE.

AMF shall include at least one N2 SM information from SMF if this step is triggered for PDU Session User Plane activation. AMF may send additional N2 SM information from SMFs in separate N2 message(s) (e.g. N2 tunnel setup request), if there is any. Alternatively, if multiple SMFs are involved, the AMF may send one N2 Request message to (R)AN after all the Nsmf_PDUSession_UpdateSMContext Response service operations from all the SMFs associated with the UE are received.

If the NG-RAN node had provided the list of recommended cells / TAs / NG-RAN node identifiers during the AN Release procedure (see clause 4.2.6 of 3GPP TS 23.502), the AMF shall include it in the N2 Request. The NG-RAN may use this information to allocate the RAN Notification Area when the NG-RAN decides to enable RRC Inactive state for the UE.

The AMF based on network configuration, may include the UE's "RRC Inactive Assistance Information" as defined in 3GPP TS 23.501.

The AMF shall include the UE Radio Capability information, if available, to the NG-RAN node as described in 3GPP TS 23.501.].

The AMF may include the Core Network Assistance Information which includes Core Network assisted RAN parameters tuning and Core Network assisted RAN paging information as defined in 3GPP TS 23.501.

13. (R)AN to UE: The NG-RAN performs RRC Connection Reconfiguration with the UE depending on the QoS Information for all the QoS Flows of the PDU Sessions whose UP connections are activated and Data Radio Bearers. For a UE that was in CM-IDLE state, if the Service Request is not triggered by UE for a signalling connection only, the User Plane security is established at this step, which is described in detail in 3GPP TS 38.331 and 3GPP TS 36.331. For a UE that was in CM-IDLE state, if the Service Request is triggered by UE for a signaling connection only, AS security context may be established in this step, which is described in detail in 3GPP TS 38.331 and 3GPP TS 36.331.

If the N2 Request includes a NAS message, the NG-RAN forwards the NAS message to the UE. The UE locally deletes context of PDU Sessions that are not available in 5GC.

NOTE 3: The reception of the Service Accept message does not imply the successful activation of the User Plane radio resources.

NOTE 4: In case not all the requested User Plane AN resources are successfully activated, 3GPP TS 38.413 will define how to handle this.

After the User Plane radio resources are setup, the uplink data from the UE can now be forwarded to NG-RAN. The NG-RAN sends the uplink data to the UPF address and Tunnel ID provided in the step 11. 14. [Conditional] (R)AN to AMF: N2 Request Ack (N2 SM information (AN Tunnel Info, List of accepted QoS Flows for the PDU Sessions whose UP connections are activated, List of rejected QoS Flows for the PDU Sessions whose UP connections are activated), PDU Session ID).

The message may include N2 SM information(s), e.g. AN Tunnel Info. NG-RAN may respond N2 SM information with separate N2 message (e.g. N2 tunnel setup response) if AMF sends separate N2 message in step 11.

If multiple N2 SM information are included in the N2 Request message in step 12, the N2 Request Ack includes multiple N2 SM information and information to enable the AMF to associate the responses to relevant SMF.

15. [Conditional] AMF to SMF: Nsmf PDUSession_UpdateSMContext Request (N2 SM information, RAT Type, Access Type) per PDU Session to the SMF. The AMF determines Access Type and RAT Type based on the Global RAN Node ID associated with the N2 interface.

If the AMF received N2 SM information (one or multiple) in step 14, then the AMF shall forward the N2 SM information to the relevant SMF per PDU Session ID. If the UE Time Zone has changed compared to the last reported UE Time Zone then the AMF shall include the UE Time Zone IE in this message.

If the PDU Session is moved from the non-3GPP access to 3GPP access (i.e. N3 tunnel for the PDU Session is established successfully), the SMF and AMF update associated access of the PDU Session. The UE updates associated access of the PDU Session when the user plane resource for the PDU Session is successfully established.

16. [Optional] SMF to PCF: If dynamic PCC is deployed, SMF may initiate notification about new location information to the PCF (if subscribed) by performing an SMF initiated SM Policy Modification procedure as defined in clause 4.16.5.1 of 3GPP TS 23.502. The PCF may provide updated policies. 17a. [Conditional] SMF to new intermediate UPF: N4 Session Modification Request (AN Tunnel Info and List of accepted QFI(s)).

If the SMF selected a new UPF to act as intermediate UPF for the PDU Session in step 5b, the SMF initiates a N4 Session Modification procedure to the new I-UPF and provides AN Tunnel Info. The Downlink Data from the new I-UPF can now be forwarded to NG-RAN and UE.

17b. [Conditional] UPF to SMF: N4 Session Modification Response.

18a. [Conditional] SMF to UPF (PSA): N4 Session Modification Request (AN Tunnel Info, List of rejected QoS Flows).

If a User Plane is to be setup or modified and after the modification there is no I-UPF, the SMF initiates a N4 Session Modification procedure to UPF (PSA) and provides AN Tunnel Info. The Downlink Data from the UPF (PSA) can now be forwarded to NG-RAN and UE.

For QoS Flows in the List of rejected QoS Flows, the SMF shall instruct the UPF to remove the rules (e.g., Packet Detection Rules etc.) which are associated with the QoS Flows.

18b. [Conditional] UPF to SMF: N4 Session Modification Response.

19. [Conditional] SMF to AMF: Nsmf PDUSession_UpdateSMContext Response.

20a. [Conditional] SMF to new UPF (intermediate): N4 Session Modification Request.

If forwarding tunnel has been established to the new I-UPF and if the timer SMF set for forwarding tunnel at step 8a has expired, SMF sends N4 Session modification request to new (intermediate) UPF acting as N3 terminating point to release the forwarding tunnel.

20b. [Conditional] new UPF (intermediate) to SMF: N4 Session modification response.

New (intermediate) UPF acting as N3 terminating point sends N4 Session Modification response to SMF.

21a. [Conditional] SMF to UPF (PSA): N4 Session Modification Request.

If forwarding tunnel has been established to the UPF (PSA) and if the timer SMF set for forwarding tunnel at step 7b has expired, SMF sends N4 Session modification request to UPF (PSA) acting as N3 Terminating Point to release the forwarding tunnel.

21b. [Conditional] UPF (PSA) to SMF: N4 Session Modification Response. UPF (PSA) acting as N3 Terminating Point sends N4 Session Modification Response to SMF.

22a. [Conditional] SMF to old UPF: N4 Session Modification Request or N4 Session Release Request.

If the SMF decided to continue using the old UPF in step 5b, the SMF sends an N4 Session Modification Request, providing AN Tunnel Info.

If the SMF decided to select a new UPF to act as intermediate UPF in step 5b, and the old UPF is not PSA UPF, the SMF initiates resource release, after timer in step 6b or 7b expires, by sending an N4 Session Release Request (Release Cause) to the old intermediate UPF.

22b. Old intermediate UPF to SMF: N4 Session Modification Response or N4 Session Release Response.

The old UPF acknowledges with an N4 Session Modification Response or N4 Session Release Response message to confirm the modification or release of resources.

For the mobility related events described in clause 4.15.4, the AMF invokes the Namf_EventExposure_Notify service operation after step 4.

Upon reception of the Namf_EventExposure_Notify with an indication that the UE is reachable, if the SMF has pending DL data the SMF invokes the Namf_Communication_N1N2MessageTransfer service operation to the AMF to establish the User Plane(s) for the PDU Sessions, otherwise the SMF resumes sending DL data notifications to the AMF in case of DL data.

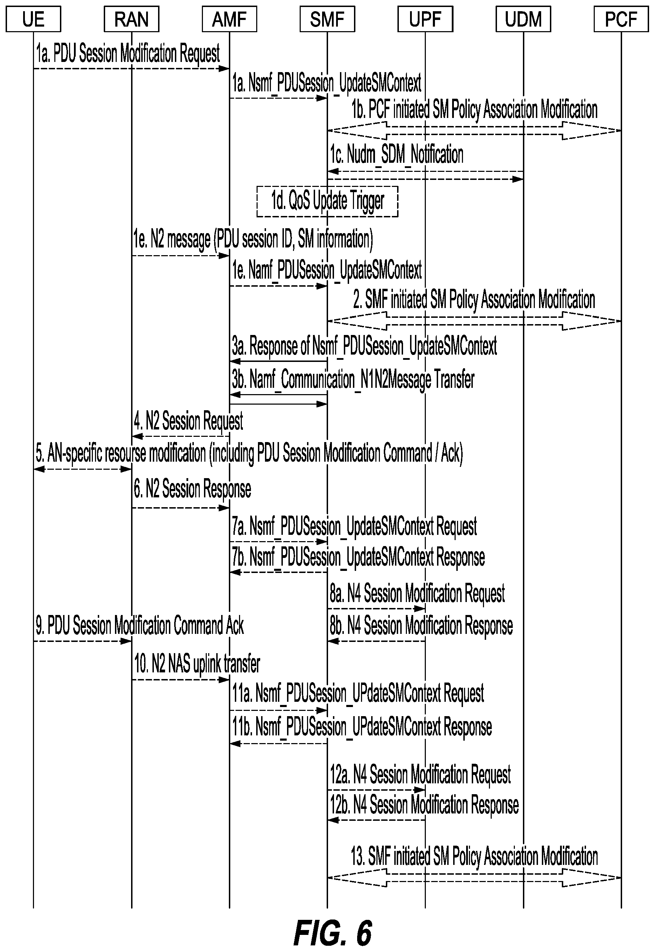

Figure 6 illustrates an embodiment of a UE or network requested PDU Session Modification based on 3GPP standard procedure described in 3GPP TS 23.502. The changes to the standard procedure in accordance with the embodiments herein are described in step 11 below, in bold and underlined, specifying that if the PDU Session modification request initiated by the SMF towards the UE, indicates release of the QoS Flows (which are not the QoS Flow associated with the default QoS rule), and the UE does not respond to the request, the SMF shall mark that those QoS Flows are to be synchronized with the UE. All the other steps of Figure 6 described in normal text below (i.e., not bold and not underlined) are based on the current standard text.

UE or network requested PDU Session Modification (non-roaming and roaming

### with local breakout)

The procedure may be triggered by following events:
1a. (UE initiated modification) The UE initiates the PDU Session Modification procedure by the transmission of an NAS message (N1 SM container (PDU Session Modification Request (PDU session ID, Packet Filters, Operation, Requested QoS, Segregation, 5GSM Core Network Capability)), PDU Session ID) message. Depending on the Access Type, if the UE was in CM-IDLE state, this SM-NAS message is preceded by the Service Request procedure. The NAS message is forwarded by the (R)AN to the AMF with an indication of User location Information. The AMF invokes Nsmf_PDUSession_UpdateSMContext (PDU Session ID, N1 SM container (PDU Session Modification Request)). When the UE requests specific QoS handling for selected SDF(s), the PDU Session Modification Request includes Packet Filters describing the SDF(s), the requested Packet Filter Operation (add, modify, delete) on the indicated Packet Filters, the Requested QoS and optionally a Segregation indication. The Segregation indication is included when the UE recommends to the network to bind the applicable SDF(s) on a distinct and dedicated QoS Flow e.g. even if an existing QoS Flow can support the requested QoS. The network should abide by the UE request, but is allowed to proceed instead with binding the selected SDF(s) on an existing QoS Flow.

NOTE 1: Only one QoS Flow is used for traffic segregation. If UE makes subsequent requests for segregation of additional SDF(s), the additional SDF(s) are multiplexed on the existing QoS Flow that is used for segregation.

The UE shall not trigger a PDU Session Modification procedure for a PDU Session corresponding to a LADN when the UE is outside the area of availability of the LADN.

The PS Data Off status, if changed, shall be included in the PCO in the PDU Session Modification Request message.

When PCF is deployed, the SMF shall further report thePS Data Off status to PCF if the PS Data Off event trigger is provisioned, the additional behaviour of SMF and PCF for 3GPP PS Data Off is defined in TS 23.503.

The 5GSM Core Network Capability is provided by the UE and handled by SMF as defined in TS 23.501 [2] clause 5.4.4b of 3GPP TS 23.502.

1b. (SMF requested modification) The PCF performs a PCF initiated SM Policy Association Modification procedure as defined in clause 4.16.5.2 of 3GPP TS 23.502 to notify SMF about the modification of policies. This may e.g.; have been triggered by a policy decision or upon AF requests, e.g. Application Function influence on traffic routing as described in step 5 in clause 4.3.6.2 of 3GPP TS 23.502.

1c. (SMF requested modification) The UDM updates the subscription data of SMF by Nudm_SDM_Notification (SUPI, Session Management Subscription Data). The SMF updates the Session Management Subscription Data and acknowledges the UDM by returning an Ack with (SUPI).

1d. (SMF requested modification) The SMF may decide to modify PDU Session. This procedure also may be triggered based on locally configured policy or triggered from the (R)AN (see clause 4.2.6 of 3GPP TS 23.502).

If the SMF receives one of the triggers in step 1b ~ 1d, the SMF starts SMF requested PDU Session Modification procedure.

1e. (AN initiated modification) (R)AN shall indicate to the SMF when the AN resources onto which a QoS Flow is mapped are released irrespective of whether notification control is configured. (R)AN sends the N2 message (PDU Session ID, N2 SM information) to the AMF. The N2 SM information includes the QFI, User location Information and an indication that the QoS Flow is released. The AMF invokes Nsmf_PDUSession_UpdateSMContext (N2 SM information).

(AN initiated notification control) In case notification control is configured for a GBR Flow, (R)AN sends a N2 message (PDU Session ID, N2 SM information) to SMF when the (R)AN decides the QoS targets of the QoS Flow cannot be fulfilled or can be fulfilled again, respectively. The N2 SM information includes the QFI and an indication that the QoS targets for that QoS Flow cannot be fulfilled or can be fulfilled again, respectively. The AMF invokes

Nsmf_PDUSession_UpdateSMContext (N2 SM information). If the PCF has subscribed to the event, SMF reports this event to the PCF for each PCC Rule for which notification control is set, see step 2. Alternatively, if dynamic PCC does not apply for this DNN, and dependent on locally configured policy, the SMF may start SMF requested PDU Session Modification procedure, see step 3b.

2. The SMF may need to report some subscribed event to the PCF by performing an SMF initiated SM Policy Association Modification procedure as defined in clause 4.16.5.1. This step may be skipped if PDU Session Modification procedure is triggered by step 1b or 1d. If dynamic PCC is not deployed, the SMF may apply local policy to decide whether to change the QoS profile.

Steps 3 to 7 are not invoked when the PDU Session Modification requires only action at a UPF (e.g. gating).

3a. For UE or AN initiated modification, the SMF responds to the AMF through Nsmf_PDUSession_UpdateSMContext (N2 SM information (PDU Session ID, QFI(s), QoS Profile(s), Session-AMBR), N1 SM container (PDU Session Modification Command (PDU Session ID, QoS rule(s), QoS rule operation, QoS Flow level QoS parameters if needed for the QoS Flow(s) associated with the QoS rule(s), Session-AMBR))). See 3GPP TS 23.501 clause 5.7 for the QoS Profile, and QoS rule and QoS Flow level QoS parameters.

The N2 SM information carries information that the AMF shall provide to the (R)AN. It may include the QoS profiles and the corresponding QFls to notify the (R)AN that one or more QoS flows were added, or modified. It may include only QFI(s) to notify the (R)AN that one or more QoS flows were removed. If the PDU Session Modification was triggered by the (R)AN Release in step 1e the N2 SM information carries an acknowledgement of the (R)AN Release. If the PDU Session Modification was requested by the UE for a PDU Session that has no established User Plane resources, the N2 SM information provided to the (R)AN includes information for establishment of User Plane resources.

The N1 SM container carries the PDU Session Modification Command that the AMF shall provide to the UE. It may include the QoS rules, QoS Flow level QoS parameters if needed for the QoS Flow(s) associated with the QoS rule(s) and corresponding QoS rule operation and QoS Flow level QoS parameters operation to notify the UE that one or more QoS rules were added, removed or modified.

### 3b. For SMF requested modification, the SMF invokes

Namf_Communication_N1N2MessageTransfer (N2 SM information (PDU Session ID, QFI(s), QoS Profile(s), Session-AMBR), N1 SM container (PDU Session Modification Command (PDU Session ID, QoS rule(s), QoS Flow level QoS parameters if needed for the QoS Flow(s) associated with the QoS rule(s), QoS rule operation and QoS Flow level QoS parameters operation, Session-AMBR))).

If the UE is in CM-IDLE state and an ATC is activated, the AMF updates and stores the UE context based on the

Namf_Communication_N1N2MessageTransfer and steps 4, 5, 6 and 7 are skipped. When the UE is reachable e.g. when the UE enters CM-CONNECTED state, the AMF forwards the N1 message to synchronize the UE context with the UE.

4. The AMF may send N2 PDU Session Request (N2 SM information received from SMF, NAS message (PDU Session ID, N1 SM container (PDU Session Modification Command))) Message to the (R)AN.

5. The (R)AN may issue AN specific signalling exchange with the UE that is related with the information received from SMF. For example, in case of a NG-RAN, an RRC Connection Reconfiguration may take place with the UE modifying the necessary (R)AN resources related to the PDU Session.

6. The (R)AN may acknowledge N2 PDU Session Request by sending a N2 PDU Session Ack (N2 SM information (List of accepted/rejected QFI(s), AN Tunnel Info, PDU Session ID), User location Information) Message to the AMF. In case of Dual Connectivity, if one or more QFls were added to the PDU Session, the Master RAN node may assign one or more of these QFls to a NG-RAN node which was not involved in the PDU Session earlier. In this case the AN Tunnel Info includes a new N3 tunnel endpoint for QFls assigned to the new NG-RAN node. Correspondingly, if one or more QFls were removed from the PDU Session, a (R)AN node may no longer be involved in the PDU Session anymore, and the corresponding tunnel endpoint is removed from the AN Tunnel Info. The NG-RAN may reject QFI(s) if it cannot fulfill the User Plane Security Enforcement information for a corresponding QoS Profile, e.g. due to the UE Integrity Protection Maximum Data Rate being exceeded.

7. The AMF forwards the N2 SM information and the User location Information received from the AN to the SMF via

Nsmf_PDUSession_UpdateSMContext service operation. The SMF replies with a Nsmf_PDUSession_UpdateSMContext Response.

If the (R)AN rejects QFI(s) the SMF is responsible of updating the QoS rules and QoS Flow level QoS parameters if needed for the QoS Flow(s) associated with the QoS rule(s) in the UE accordingly.

8. The SMF may update N4 session of the UPF(s) that are involved by the PDU Session Modification by sending N4 Session Modification Request message to the UPF. (see NOTE 2)

9. The UE acknowledges the PDU Session Modification Command by sending a NAS message (PDU Session ID, N1 SM container (PDU Session Modification Command Ack)) message.

10. The (R)AN forwards the NAS message to the AMF.

11. The AMF forwards the N1 SM container (PDU Session Modification Command Ack) and User Location Information received from the AN to the SMF via Nsmf_PDUSession_UpdateSMContext service operation. The SMF replies with a Nsmf_PDUSession_UpdateSMContext Response.

**If the SMF initiated modification is to delete QoS Flows (e.g. triggered by PCF) and the SMF does not receive response from the UE, the SMF marks that the status of those GBR QoS Flows are to be synchronized with the UE.**

12. The SMF may update N4 session of the UPF(s) that are involved by the PDU Session Modification by sending N4 Session Modification Request (N4 Session ID) message to the UPF. For a PDU Session of Ethernet PDU Session Type, the SMF may notify the UPF to add or remove Ethernet Packet Filter Set(s) and forwarding rule(s).

NOTE 2: The UPFs that are impacted in the PDU Session Modification procedure depends on the modified QoS parameters and on the deployment. For example in case of the session AMBR of a PDU Session with an UL CL changes, only the UL CL is involved. This note also applies to the step 8.

13. If the SMF interacted with the PCF in step 1b or 2, the SMF notifies the PCF whether the PCC decision could be enforced or not by performing an SMF initiated SM Policy Association Modification procedure as defined in clause 4.16.5.1 of 3GPP TS 23.502.

SMF notifies any entity that has subscribed to User Location Information related with PDU Session change.

If step 1b is triggered to perform Application Function influence on traffic routing by step 5 in clause 4.3.6.2 of 3GPP TS 23.502, the SMF may reconfigure the User Plane of the PDU Session as described in step 6 in clause 4.3.6.2 of 3GPP TS 23.502.

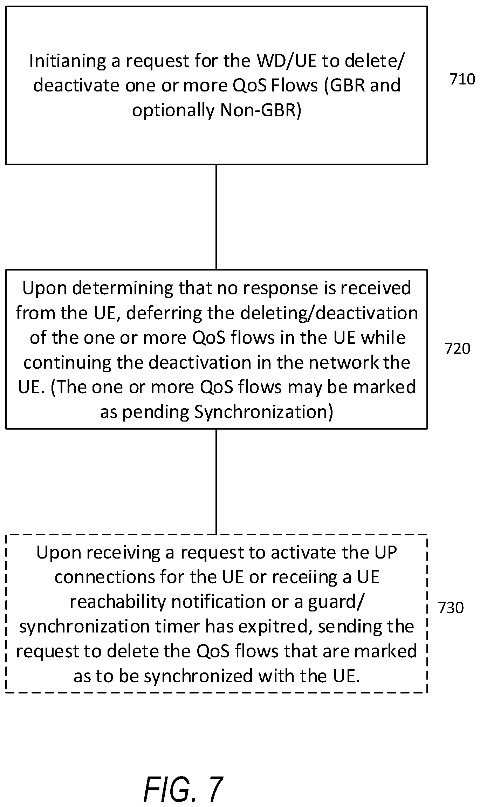

Figure 7 illustrates a method of operation of an SMF according to some embodiments.

**Step 710:** SMF determines that one or more QoS flows for a PDU session should be deleted, where the one or more QoS flows is not associated to the default QoS rule. The one or more QoS flows are mainly GBR QoS flows, but they may be non-GBR QoS flows which are not associated to a default QoS rule as well. The deletion of the QoS flows (not associated to the default QoS rule) may be triggered by the PCF or internally or by other NF or by an Access Network, AN release procedure due to radio connection problem causing the radio connection to be lost with the UE. The SMF initiates the step of PDU session modification to delete/release/deactivate the QoS Flows in the UE. It sends a request for the UE via the AMF to trigger the release or deactivation of those QoS flows. Any relevant request which function is to delete the one or more QoS flows in the UE can be used.

**Step 720:** If the SMF does not receive a response or receives a failure notification from the AMF indicating that UE is not responding to the deactivation/release/delete of QoS flows request, the SMF executes the step of marking the status of those QoS Flows (GBR or non-GBR) as to be synchronized with the UE or deferring the procedure of deleting the GBR QoS Flows. Note that the SMF would continue with deactivation of the QoS flows in the network even if the UE fails to respond to the request. _If the deletion of the QoS flows is triggered by another function, such as PCF, it will inform the PCF that the QoS flows are not released by the UE, but that it will synchronize with the UE at the next available opportunity, such as when the UE triggers a Service Request for activating the UP connections._The PCF may then notify the Application Function such as IMS P-CSCF.

The SMF therefore defers the QoS Flows (GBR and/or non-GBR) deactivation towards the UE. Optionally, the SMF may (if not already done) subscribe to UE reachability notification from the AMF, or waits for the UE to initiate a NAS Service request, or it could start a timer (guard timer).

**Step 730 (optional):** If the SMF receives from the AMF a request for activating the User Plane (e.g., NSMF_PDU Session_UpdateSMContext request) that may be triggered by a UE a Service Request or the like for activating the UP connections, and the request is accepted by the SMF, or if the guard time expires or if the SMF receives a notification from the AMF that the UE is reachable, the SMF then execute the step of checking if there is any QoS Flow that is deleted in the 5GC but not synchronized with the UE yet.

If the SMF received from the AMF a request for activating the User Plane (e.g., NSMF_PDU Session_UpdateSMContext request), the SMF would then send a response to the request to the AMF and includes a NAS PDU Session Modification Command in N1 SM Container, the AMF should forward the NAS message to the UE via the AN. The NAS PDU Session Modification Command is to delete those QoS Flows that were marked as to be synchronized with the UE. The SMF would include in the NAS PDU Session Modification Command the Authorized QoS rules and the Authorized QoS flow descriptions that indicates the GBR (or non-GBR) QoS rules and GBR (or Non-GBR) QoS flows to be deactivated respectively. If mechanism of overall QoS rules and QoS flows status synchronization is used, SMF includes the QoS rules status and QoS flows status information in PDU Session Modification Command.

When the UE receives the PDU Session Modification Command from the AMF, it deactivates the GBR QoS rules and GBR QoS flows according to the Authorized QoS rules and Authorized QoS flow descriptions or QoS rules status and QoS flows status information sent from SMF.

If the synchronization is triggered by expiration of a guard time or a notification that UE is reachable, the SMF sends an request to the AMF, where the request includes the NAS PDU Session Modification Command indicating the QoS Flows (GBR, and optionally non-GBR) that should be deleted, similar to the above.

In another embodiment, If the UE has locally deactivated the QoS flows, but the was unable to update the network, the SMF receives from the AMF an Nsmf_PDUSession_UpdateSMContext request to SMF that includes the **QoS rules status and QoS flows status,** the SMF deactivates the GBR QoS rules and GBR QoS flows according to the Requested QoS rules and Requested QoS flow descriptions or QoS rules status and QoS flows status information sent from

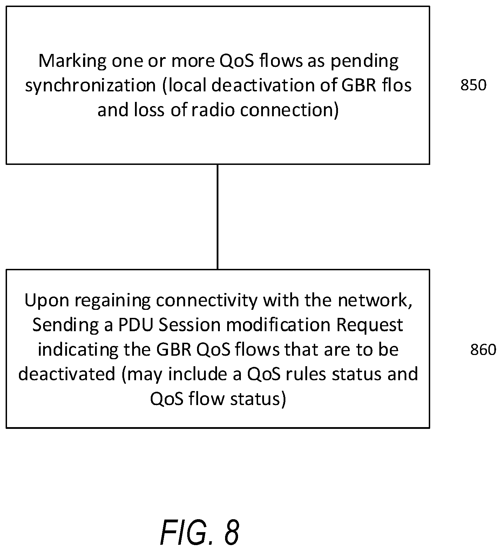

Figure 8 illustrates a method of operation of a wireless device such as user equipment, UE where the UE has locally deactivated the GBR QoS flows, the radio connection is lost and is unable to synchronize with the network.

**Step 850:** UE locally deactivating the GBR QoS flows but unable to notify the network (SMF). It defers the synchronization of the QoS Flows, may mark the QoS Flows as pending synchronization.

**Step 860:** When it regains the radio connection with the network, the UE executes the step of sending a PDU Session Modification request to AMF to indicate that some QoS flows GBR are deleted/deactivated. In the Requested QoS rules and Requested QoS flow descriptions of PDU Session Modification request, the UE indicates the GBR QoS rules and GBR QoS flows to be deactivated respectively. If mechanism of overall QoS rules status synchronization is used, UE includes the QoS rules status and QoS flows status information in PDU Session Modification request. The QoS rules status and QoS Flow Status indicate the current status of the GBR flows/rules that are activated in the UE, and may include information of the flows and rules that have been locally deactivated.

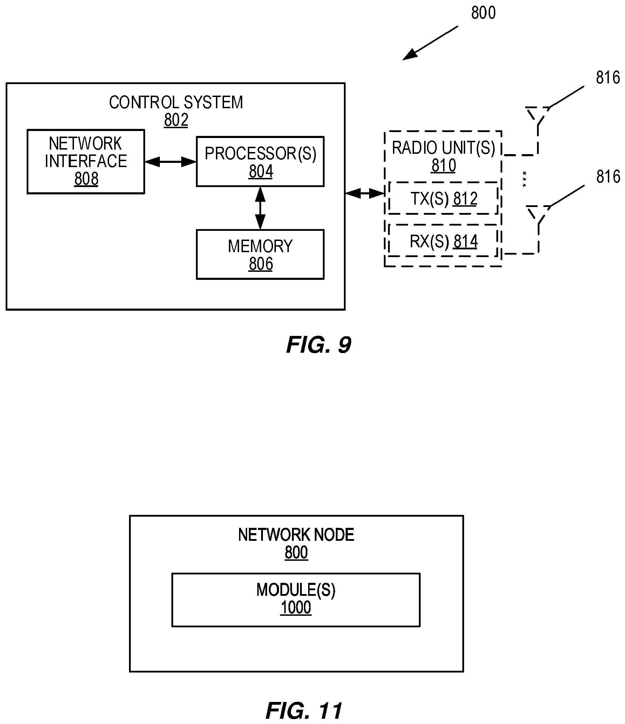

Figure 9 is a schematic block diagram of a network node 800 according to some embodiments of the present disclosure. The network node may be a radio access node (e.g., a base station or other node in the radio access network) or a core network (e.g., a physical node that implements one or more core network NFs and/or core network services). As illustrated, the network node 800 includes a control system 802 that includes one or more processors 804 (e.g., Central Processing Units (CPUs), Application Specific Integrated Circuits (ASICs), Field Programmable Gate Arrays (FPGAs), and/or the like), memory 806, and a network interface 808. The one or more processors 804 are also referred to herein as processing circuitry.

In addition, in embodiments in which the network node 800 is a radio access node, the network node 800 includes one or more radio units 810 that each includes one or more transmitters 812 and one or more receivers 814 coupled to one or more antennas 816. The radio units 810 may be referred to or be part of radio interface circuitry. In some embodiments, the radio unit(s) 810 is external to the control system 802 and connected to the control system 802 via, e.g., a wired connection (e.g., an optical cable). However, in some other embodiments, the radio unit(s) 810 and potentially the antenna(s) 816 are integrated together with the control system 802.

The one or more processors 804 operate to provide one or more functions of a network node 800, and in particular the functions of a network function(s) or service(s), as described herein. In some embodiments, the function(s) are implemented in software that is stored, e.g., in the memory 806 and executed by the one or more processors 804.

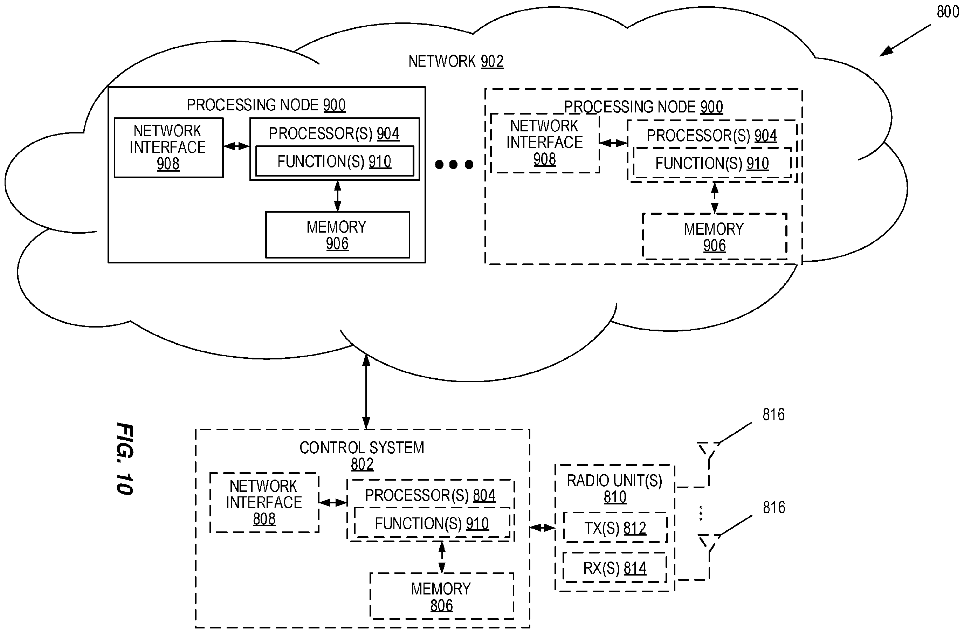

Figure 10 is a schematic block diagram that illustrates a virtualized embodiment of the network node 800 according to some embodiments of the present disclosure. This discussion is equally applicable to other types of network nodes. Further, other types of network nodes may have similar virtualized architectures.

As used herein, a "virtualized" network node is an implementation of the network node 800 in which at least a portion of the functionality of the network node 800 is implemented as a virtual component(s) (e.g., via a virtual machine(s) executing on a physical processing node(s) in a network(s)). As illustrated, in some embodiments, the network node 800 includes the control system 802 that includes the one or more processors 804 (e.g., CPUs, ASICs, FPGAs, and/or the like), the memory 806, and the network interface 808 and, if the network node 800 is a radio access node, the one or more radio units 810 that each includes the one or more transmitters 812 and the one or more receivers 814 coupled to the one or more antennas 816, as described above. The control system 802 is connected to one or more processing nodes 900 coupled to or included as part of a network(s) 902 via the network interface 808. Each processing node 900 includes one or more processors 904 (e.g., CPUs, ASICs, FPGAs, and/or the like), memory 906, and a network interface 908.

In this example, functions 910 of the network node 800 (e.g., functions of the network function(s) or service(s) implemented by the network node 800) described herein are implemented at the one or more processing nodes 900 or distributed across the control system 802 and the one or more processing nodes 900 in any desired manner. In some particular embodiments, some or all of the functions 910 of the network node 800 described herein are implemented as virtual components executed by one or more virtual machines implemented in a virtual environment(s) hosted by the processing node(s) 900. As will be appreciated by one of ordinary skill in the art, additional signaling or communication between the processing node(s) 900 and the control system 802 is used in order to carry out at least some of the desired functions 910.

In some embodiments, a computer program including instructions which, when executed by at least one processor, causes the at least one processor to carry out the functionality of network node 800 or a node (e.g., a processing node 900) implementing one or more of the functions 910 of the radio access node 800 in a virtual environment according to any of the embodiments described herein is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 11 is a schematic block diagram of the network node 800 according to some other embodiments of the present disclosure. The network node 800 includes one or more modules 1000, each of which is implemented in software. The module(s) 1000 provide the functionality of the network node 800 described herein. This discussion is equally applicable to the processing node 900 of Figure 6 where the modules 1000 may be implemented at one of the processing nodes 900 or distributed across multiple processing nodes 900 and/or distributed across the processing node(s) 900 and the control system 802.

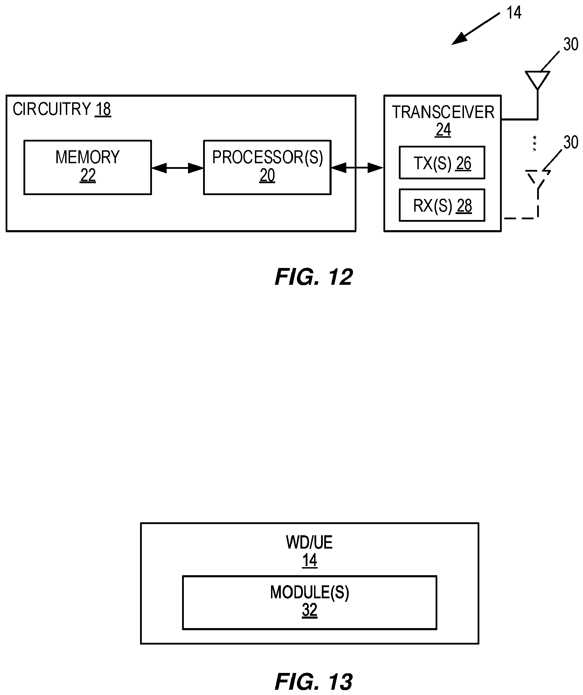

Figure 12 is a schematic block diagram of the wireless device 14 (e.g., a UE 14) according to some embodiments of the present disclosure. As illustrated, the wireless device 14 includes circuitry 18 comprising one or more processors 20 (e.g., Central Processing Units (CPUs), Application Specific Integrated Circuits (ASICs), Field Programmable Gate Arrays (FPGAs), and/or the like) and memory 22. The wireless device 14 also includes one or more transceivers 24 each including one or more transmitter 26 and one or more receivers 28 coupled to one or more antennas 30. In some embodiments, the functionality of the wireless device 14 described above may be fully or partially implemented in software that is, e.g., stored in the memory 22 and executed by the processor(s) 20.

In some embodiments, a computer program including instructions which, when executed by at least one processor, causes the at least one processor to carry out the functionality of the wireless device 14 according to any of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as memory).

Figure 13 is a schematic block diagram of the wireless device 14 according to some other embodiments of the present disclosure. The wireless device 14 includes one or more modules 32, each of which is implemented in software. The module(s) 32 provide the functionality of the wireless device 14 (e.g., UE 14) described herein.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

### Abbreviations

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • AMF | Access Management Function |
| • API | Application Program Interface |
| • ASIC | Application Specific Integrated Circuit |
| • AUSF | Authentication Service Function |
| • CPU | Central Processing Unit |
| • CT | Core Network and Terminals |
| • DSP | Digital Signal Processor |
| • eNB | Enhanced or Evolved Node B |
| • FPGA | Field Programmable Gate Array |
| • gNB | New Radio Base Station |
| • LTE | Long Term Evolution |
| • NR | New Radio |
| • RAM | Random Access Memory |
| • RAN | Radio Access Network |
| • ROM | Read Only Memory |
| • RRH | Remote Radio Head |
| • SBA | Service-Based Architecture |
| • UDM | User Data Manager |
| • UDP | User Datagram Protocol |
| • UE | User Equipment |

## Claims

1. A method of operation of a network node (800) implementing a Session Management Function, SMF, in a core network of a cellular communications system, comprising:
- initiating (710) deactivation procedure with a User Equipment, UE, (14) for a Packet Data Unit, PDU, session for deactivation of at least one of a Guaranteed bit rate, GBR, Quality of Service, QoS, flow and a non-GBR QoS flow that is not associated to a default QoS rule;
- upon determining that a response to the deactivation procedure is not received from the UE, deferring (720) the deactivation procedure;
- marking (850) the at least one of the GBR QoS flow and the non-GBR QoS flow as pending synchronization with the UE; and
- upon determining that the deferred deactivation procedure is to be re-initiated, synchronizing with the UE the at least one of the GBR QoS flow and the non-GBR QoS flow.

2. The method of claim 1, wherein the method further comprises subscribing to notification of reachability for the UE at the Access Mobility Management function, AMF.

3. The method of claim 1, wherein the deferred deactivation procedure is re-initiated in response to at least one of:
- receiving a request to activate the user plane, UP, connections for the UE; or
- receiving a notification that the UE is reachable; or
- the synchronization timer has expired.

4. The method of claims 1 and 3, wherein the deactivation procedure to synchronize the at least one of the GBR QoS flow and the non-GBR QoS flow with the UE comprises providing to the UE a QoS rule status and a QoS flow status indicating each of the at least one of the GBR QoS flow and non-GBR QoS Flow to synchronize, or the at least one of the GBR QoS flow and non-GBR QoS Flow that are deleted in the SMF.

5. A network node (800) implementing a Session Management Function, SMF, in a core network of a cellular communications system, adapted to perform the method of any one of claims 1 to 4.

6. A computer program comprising instructions which, when executed on at least one processor, cause the at least one processor to carry out the method according to any one of claims 1 to 4.

7. A carrier containing the computer program of claim 6, wherein the carrier is one of an electronic signal, an optical signal, a radio signal, or a computer readable storage medium.

8. A method of operation of a user equipment, UE, (14) with an established Packet Data Unit, PDU, Session with a Core network, and the PDU session comprising at least one of a Guaranteed Bit Rate, GBR, Quality of Service, QoS, Flow and a non-Guaranteed non-GBR QoS flow that is not associated to a default QoS rule, the method comprising:
- locally deactivating the at least one of the GBR QoS flow and the non-GBR QoS Flow that is not associated to the default QoS Rule of the Packet Data Unit, PDU, session;
- upon determining that the Core network is not reachable, deferring synchronization of the at least one of the GBR QoS flow and the non-GBR QoS Flow that is not associated with the default QoS Rule; and
- upon determining the Core network is reachable or a synchronization timer has expired, sending a request to the Core Network to synchronize the at least one of the deactivated GBR QoS flow and the deactivated non-GBR QoS Flow that is not associated with the default QoS Rule.

9. The method of claim 8, wherein determining that the Core network is not reachable is due to poor radio conditions.

10. The method of claim 8, wherein the request to synchronize the at least one of the GBR QoS flow and the non-GBR QoS Flow is a NAS PDU Session Modification request message.

11. The method of claim 8 or 10, wherein the request comprises a QoS Rules status and a QoS Flow status.

12. A user equipment, UE, (14), adapted to perform the method of any one of the claims 8 to 11.

13. A computer program comprising instructions which, when executed on at least one processor, cause the at least one processor to carry out the method according to any one of claims 8 to 11.

14. A carrier containing the computer program of claim 13, wherein the carrier is one of an electronic signal, an optical signal, a radio signal, or a computer readable storage medium.

## Patentansprüche

1. Verfahren zum Betrieb eines Netzwerkknotens (800), der eine Sitzungsverwaltungsfunktion, SMF, in einem Kernnetzwerk eines zellularen Kommunikationssystems implementiert, umfassend:
- Initiieren (710) einer Deaktivierungsprozedur mit einer Benutzereinrichtung, UE, (14) für eine Paketdateneinheits-,PDU-,Sitzung zur Deaktivierung mindestens eines von einem Dienstqualitäts-,QoS-,Fluss mit zugesicherter Bitrate, GBR, und einem Nicht-GBR-QoS-Fluss, der nicht mit einer Standard-QoS-Regel assoziiert ist;
- Verschieben (720) der Deaktivierungsprozedur bei Bestimmen, dass keine Antwort auf die Deaktivierungsprozedur von der UE empfangen wird;
- Markieren (850) des mindestens einen von dem GBR-QoS-Fluss und dem Nicht-GBR-QoS-Fluss als zur Synchronisation mit der UE anhängig; und
- Synchronisieren des mindestens einen von dem GBR-QoS-Fluss und dem Nicht-GBR-QoS-Fluss mit der UE bei Bestimmen, dass die verschobene Deaktivierungsprozedur reinitiiert werden soll.

2. Verfahren nach Anspruch 1, wobei das Verfahren ferner ein Anmelden zur Benachrichtigung von Erreichbarkeit für die UE an der Zugangs- und Mobilitätsverwaltungsfunktion, AMF, umfasst.

3. Verfahren nach Anspruch 1, wobei die verschobene Deaktivierungsprozedur in Reaktion auf mindestens eines von Folgendem reinitiiert wird:
- Empfangen einer Anforderung zum Aktivieren der Benutzerebenen-,UP-,Verbindungen für die UE; oder
- Empfangen einer Benachrichtigung, dass die UE erreichbar ist; oder
- der Synchronisationszeitgeber ist abgelaufen.

4. Verfahren nach Anspruch 1 und 3, wobei die Deaktivierungsprozedur zum Synchronisieren des mindestens einen von dem GBR-QoS-Fluss und dem Nicht--GBR-QoS-Fluss mit der UE ein Bereitstellen für die UE eines QoS-Regelstatus und eines QoS-Flussstatus umfasst, der jeden des mindestens einen von dem GBR-QoS-Fluss und dem Nicht--GBR-QoS-Fluss, der synchronisiert werden soll, oder des mindestens einen von dem GBR-QoS-Fluss und dem Nicht-GBR-QoS-Fluss angibt, der in der SMF gelöscht wird.

5. Netzwerkknoten (800), der eine Sitzungsverwaltungsfunktion, SMF, in einem Kernnetzwerk eines zellularen Kommunikationssystems implementiert und zum Durchführen des Verfahrens nach einem der Ansprüche 1 bis 4 ausgelegt ist.

6. Computerprogramm, umfassend Anweisungen, die bei Ausführung auf mindestens einem Prozessor den mindestens einen Prozessor zum Durchführen des Verfahrens nach einem der Ansprüche 1 bis 4 veranlassen.

7. Datenträger, der das Computerprogramm nach Anspruch 6 enthält, wobei der Datenträger eines von einem elektronischen Signal, einem optischen Signal, einem Funksignal oder einem computerlesbaren Speichermedium ist.

8. Verfahren zum Betrieb einer Benutzereinrichtung, UE, (14) mit einer aufgebauten Paketdateneinheits-, PDU-,Sitzung mit einem Kernnetzwerk, wobei die PDU-Sitzung mindestens einen von einem Dienstqualitäts-,QoS-,Fluss mit zugesicherter Bitrate, GBR, und einem Nicht-GBR-QoS-Fluss umfasst, der nicht mit einer Standard-QoS-Regel assoziiert ist, wobei das Verfahren umfasst:
- lokales Deaktivieren des mindestens einen von dem GBR-QoS-Fluss und dem Nicht--GBR-QoS-Fluss, der nicht mit der Standard-QoS-Regel der Paketdateneinheits-,PDU-,Sitzung assoziiert ist;
- Verschieben der Synchronisation des mindestens einen von dem GBR-QoS-Fluss und dem Nicht--GBR-QoS-Fluss, der nicht mit der Standard-QoS-Regel assoziiert ist, bei Bestimmen, dass das Kernnetzwerk nicht erreichbar ist; und
- Senden einer Anforderung zum Synchronisieren des mindestens einen von dem deaktivierten GBR-QoS-Fluss und dem deaktivierten Nicht--GBR-QoS-Fluss, der nicht mit der Standard-QoS-Regel assoziiert ist, an das Kernnetzwerk bei Bestimmen, dass das Kernnetzwerk erreichbar ist oder ein Synchronisationszeitgeber abgelaufen ist.

9. Verfahren nach Anspruch 8, wobei das Bestimmen, dass das Kernnetzwerk nicht erreichbar ist, auf schlechte Funkbedingungen zurückzuführen ist.

10. Verfahren nach Anspruch 8, wobei die Anforderung zum Synchronisieren des mindestens einen von dem GBR-QoS-Fluss und dem Nicht-GBR-QoS-Fluss eine NAS-Nachricht zur Anforderung einer PDU-Sitzungsmodifikation ist.

11. Verfahren nach Anspruch 8 oder 10, wobei die Anforderung einen QoS-Regelstatus und einen QoS-Flussstatus umfasst.

12. Benutzereinrichtung, UE, (14), die zum Durchführen des Verfahrens nach einem der Ansprüche 8 bis 11 ausgelegt ist.

13. Computerprogramm, umfassend Anweisungen, die bei Ausführung auf mindestens einem Prozessor den mindestens einen Prozessor zum Durchführen des Verfahrens nach einem der Ansprüche 8 bis 11 veranlassen.

14. Datenträger, der das Computerprogramm nach Anspruch 13 enthält, wobei der Datenträger eines von einem elektronischen Signal, einem optischen Signal, einem Funksignal oder einem computerlesbaren Speichermedium ist.

## Revendications

1. Procédé de fonctionnement d'un noeud de réseau (800) mettant en oeuvre une fonction de gestion de session, SMF, dans un réseau central d'un système de communication cellulaire, comprenant :
- l'initiation (710) d'une procédure de désactivation avec un équipement utilisateur, UE, (14) pour une session d'unité de données en paquets, PDU, pour une désactivation d'au moins l'un parmi un flux de qualité de service, QoS, à débit binaire garanti, GBR, et un flux QoS non-GBR qui n'est pas associé à une règle QoS par défaut ;
- à la détermination qu'une réponse à la procédure de désactivation n'est pas reçue depuis l'UE, le report (720) de la procédure de désactivation ;
- le marquage (850) de l'au moins un parmi le flux QoS GBR et le flux QoS non-GBR en tant qu'une synchronisation en attente avec l'UE ; et
- à la détermination que la procédure de désactivation reportée doit être réinitiée, la synchronisation avec l'UE de l'au moins un parmi le flux QoS GBR et le flux QoS non-GBR.

2. Procédé selon la revendication 1, dans lequel le procédé comprend en outre l'abonnement à une notification d'accessibilité pour l'UE au niveau de la fonction de gestion de mobilité d'accès, AMF.

3. Procédé selon la revendication 1, dans lequel la procédure de désactivation reportée est réinitiée en réponse à au moins l'une parmi :
- la réception d'une demande d'activation des connexions de plan d'utilisateur, UP, pour l'UE ;
ou
- la réception d'une notification que l'UE est accessible ; ou
- l'expiration de la temporisation de synchronisation.

4. Procédé selon les revendications 1 et 3, dans lequel la procédure de désactivation pour synchroniser l'au moins un parmi le flux QoS GBR et le flux QoS non-GBR avec l'UE comprend la fourniture à l'UE d'un statut de règle QoS et d'un statut de flux QoS indiquant chacun de l'au moins un parmi le flux QoS GBR et le flux QoS non-GBR à synchroniser, ou l'au moins un parmi le flux QoS GBR et le flux QoS non-GBR qui est supprimé dans la SMF.

5. Noeud de réseau (800) mettant en oeuvre une fonction de gestion de session, SMF, dans un réseau central d'un système de communication cellulaire, apte à réaliser le procédé selon l'une quelconque des revendications 1 à 4.

6. Programme informatique comprenant des instructions qui, lorsqu'elles sont exécutées sur au moins un processeur, amènent l'au moins un processeur à effectuer le procédé selon l'une quelconque des revendications 1 à 4.

7. Support contenant le programme informatique selon la revendication 6, dans lequel le support est l'un parmi un signal électronique, un signal optique, un signal radio et un support de stockage lisible par ordinateur.

8. Procédé de fonctionnement d'un équipement utilisateur, UE, (14) avec une session d'unité de données en paquets, PDU, établie avec un réseau central, et la session PDU comprenant au moins l'un parmi un flux de qualité de service, QoS, à débit binaire garanti, GBR, et un flux QoS non-GBR non garanti qui n'est pas associé à une règle QoS par défaut, le procédé comprenant :
- la désactivation localement de l'au moins un parmi le flux QoS GBR et le flux QoS non-GBR qui n'est pas associé à la règle QoS par défaut de la session d'unité de données en paquets, PDU ;
- à la détermination que le réseau central n'est pas accessible, le report d'une synchronisation de l'au moins un parmi le flux QoS GBR et le flux QoS non-GBR qui n'est pas associé à la règle QoS par défaut ; et
- à la détermination que le réseau central est accessible ou qu'une temporisation de synchronisation a expiré, l'envoi d'une demande au réseau central pour synchroniser l'au moins un parmi le flux QoS GBR désactivé et le flux QoS non-GBR désactivé qui n'est pas associé à la règle QoS par défaut.

9. Procédé selon la revendication 8, dans lequel la détermination que le réseau central n'est pas accessible est due à de mauvaises conditions radio.

10. Procédé selon la revendication 8, dans lequel la demande de synchronisation de l'au moins un parmi le flux QoS GBR et le flux QoS non-GBR est un message de demande de modification de session PDU NAS.

11. Procédé selon la revendication 8 ou 10, dans lequel la demande comprend un statut de règle QoS et un statut de flux QoS.

12. Equipement utilisateur, UE, (14), apte à réaliser le procédé selon l'une quelconque des revendications 8 à 11.

13. Programme informatique comprenant des instructions qui, lorsqu'elles sont exécutées sur au moins un processeur, amènent l'au moins un processeur à effectuer le procédé selon l'une quelconque des revendications 8 à 11.

14. Support contenant le programme informatique selon la revendication 13, dans lequel le support est l'un parmi un signal électronique, un signal optique, un signal radio et un support de stockage lisible par ordinateur.
